# EUROPEAN PATENT SPECIFICATION

(11) **EP 3 950 209 B1**
(45) Date of publication and mention of the grant of the patent: **16.07.2025**
(21) Application number: 19922188.8
(22) Date of filing: 25.03.2019
(51) Int. Cl.: B23K 26/342, B23K 26/21, B22F 10/25, B22F 10/85, B22F 12/90, B29C 64/393, B33Y 50/02, B22F 7/06, B22F 7/08, B29C 64/141, G05B 19/401, G05B 19/4099

(54) **BUILD SYSTEM CONFIGURED TO BUILD, AND METHOD OF BUILDING A BUILD OBJECT ON AN OBJECT**
ZUM BAUEN KONFIGURIERTES BAUSYSTEM, UND VERFAHREN ZUM BAUEN EINES BAUOBJEKTES AUF EINEM OBJEKT
SYSTÈME DE CONSTRUCTION CONFIGURÉ POUR CONSTRUIRE, ET PROCÉDÉ DE CONSTRUCTION D'UN OBJET DE CONSTRUCTION SUR UN OBJET

(43) Date of publication of application: 09.02.2022
(60) Divisional application: 25181277.2
(73) Proprietor: NIKON CORPORATION, Tokyo 140-8601 (JP)
(72) Inventor: MATSUDA, Takeshi, Tokyo 108-6290 (JP)
(74) Representative: Hoffmann Eitle
(86) International application number: PCT/JP2019/012491
(87) International publication number: WO 2020/194448

(56) References cited:
- WO-A1-2018/093760
- JP-A- 2007 111 763
- JP-A- 2008 149 326
- JP-A- 2010 120 104
- JP-A- H10 156 563
- JP-U- H0 726 079
- JP-U- H0 726 079
- US-A1- 2019 022 760

## Description

### Technical Field

The present invention relates to a technical field of a build system and a build method for building a build object on an object according to the preamble of claims 1 and 13 (see for example WO 2018/093760 A1).

### Background Art

US2017/014909A1 (Patent Literature 1) discloses a build system that builds a build object by melting powder-like materials with an energy beam and then solidifying the molten materials. A technical problem of this build system is to properly build the build object.

### Citation List

### Patent Literature

Each of US 2019/022760 Al and JP H07 26079 U forms further part of the state of the art relative to the present disclosure.

### Summary of Invention

A first aspect of the present invention defines a build system configured to build a build object on an object according to claim 1.

A second aspect of the present invention defines a build method configured to build a build object on an object according to claim 13.

The dependent claims define particular embodiments of each respective aspect.

An operation and another advantage of the above described aspect will be apparent from an embodiment described below.

### Brief Description of Drawings

[FIG. 1] FIG. 1 is a cross-sectional view that illustrates a structure of a processing system in a present embodiment.
[FIG. 2] FIG. 2 is a system configuration diagram that illustrates a system configuration of the processing system in the present embodiment.
[FIG. 3] Each of FIG. 3A to FIG. 3J is a planar view that illustrates a projection pattern projected by a projection apparatus.
[FIG. 4] FIG. 4 is a flowchart that illustrates a flow of a coordinate matching operation.
[FIG. 5] FIG. 5 is a planer view that illustrates a stage including placement surface on which a mark for an alignment is formed.
[FIG. 6] FIG. 6 is a V-V' cross-sectional view of the stage illustrated in FIG. 5.
[FIG. 7] FIG. 7 is a planer view that illustrates a beam detection member on which a mark for an alignment is formed.
[FIG. 8] FIG. 8 is a VII#1-VII#1' cross-sectional view of the beam detection member illustrated in FIG. 7.
[FIG. 9] FIG. 9 is a VII#2-VII#2' cross-sectional view of the beam detection member illustrated in FIG. 7.
[FIG. 10] FIG. 10 is a planer view that illustrates the beam detection member placed on the placement surface.
[FIG. 11] FIG. 1 is a planer view that illustrates a fiducial member on which a mark for an alignment is formed.
[FIG. 12] FIG. 12 is a planer view that illustrates the fiducial member placed on the placement surface.
[FIG. 13] FIG. 13 is a perspective view that illustrates the placement surface and a workpiece in a stage coordinate system.
[FIG. 14] FIG. 14 is a flowchart that illustrates a flow of a first workpiece model alignment operation.
[FIG. 15] FIG. 15 is a flowchart that illustrates a flow of a second workpiece model alignment operation.
[FIG. 16] FIG. 16 is a conceptual diagram that conceptually illustrates an aspect in which a three-dimensional model (namely, the workpiece) represented by model shape information and the workpiece represented by measured shape information are pattern-matched.
[FIG. 17] FIG. 17 is a flowchart that illustrates a flow of a third workpiece model alignment operation.
[FIG. 18] FIG. 18 is a cross-sectional view that illustrates an aspect in which a plurality of guide lights intersect at a designated point.
[FIG. 19] FIG. 19 is a cross-sectional view that illustrates an aspect in which the plurality of guide lights do not intersect at the designated point.
[FIG. 20] FIG. 20A is a planer view that illustrates beam spots of the plurality of guide lights on a surface (especially, the user designated point) of the workpiece W when the plurality of guide lights intersect at the user designated point and FIG. 20B is a planer view that illustrates beam spots of the plurality of guide lights on a surface (especially, the user designated point) of the workpiece W when the plurality of guide lights do not intersect at the user designated point.
[FIG. 21] FIG. 21 is a perspective view that illustrates the workpiece and a three-dimensional structural object in the stage coordinate system.
[FIG. 22] FIG. 22 is a flowchart that illustrates a flow of a processing model alignment operation.
[FIG. 23] FIG. 23 is a planar view that illustrates a display example of a workpiece model.
[FIG. 24] FIG. 24 is a planar view that illustrates a display example of the workpiece model.
[FIG. 25] FIG. 25 is a planar view that illustrates a display example of the workpiece model.
[FIG. 26] FIG. 26 is a planar view that illustrates a display example of the workpiece model.
[FIG. 27] FIG. 27 is a planar view that illustrates a display example on the display.
[FIG. 28] FIG. 28 is a cross-sectional view that illustrates the workpiece model and a processing model.
[FIG. 29] FIG. 29 is a cross-sectional view that conceptually illustrates a modification example of processing information with the processing model and the workpiece model.
[FIG. 30] Each of FIG. 30A to FIG. 30C is a cross-sectional view that conceptually illustrates one example of a method of modifying the processing information with the processing model and the workpiece model.
[FIG. 31] Each of FIG. 31A to FIG. 31C is a cross-sectional view that conceptually illustrates another example of a method of modifying the processing information with the processing model and the workpiece model.
[FIG. 32] Each of FIG. 32A to FIG. 32E is a cross-sectional view that illustrates an aspect in which a certain area on the workpiece is irradiated with light and build materials are supplied thereto.
[FIG. 33] Each of FIG. 23A to FIG. 33C is a cross-sectional view that illustrates a process for forming a three-dimensional structural object.
[FIG. 34] FIG. 34 is a system configuration diagram that illustrates another example of the system configuration of the processing system in the present embodiment.

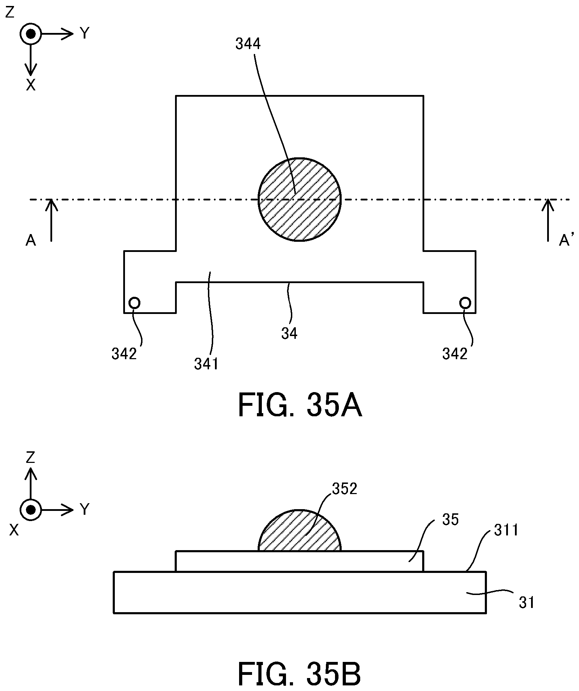

[FIG. 35] FIG. 35A is a planar view that illustrates another example of the fiducial member and FIG. 25B is an A-A' cross-sectional view in FIG. 35A.

### Description of Embodiments

Next, with reference to drawings, an embodiment of a build system will be described. In the below described description, the embodiment of a build system will be described by using a processing system SYS (namely, a build system) that forms a build object on a workpiece W that is one example of an object by performing an additive processing. Especially, in the below described description, the embodiment of a build system will be described by using a processing system SYS that performs the additive processing based on a LMD (Laser Metal Deposition). The additive processing based on the Laser Metal Deposition is an additive processing for forming a three-dimensional structural object ST that is integrated with the workpiece W or that is separable from the workpiece W by melting build materials M supplied to the workpiece W by processing light EL. Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming.

Moreover, in the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Structure of Processing System SYS

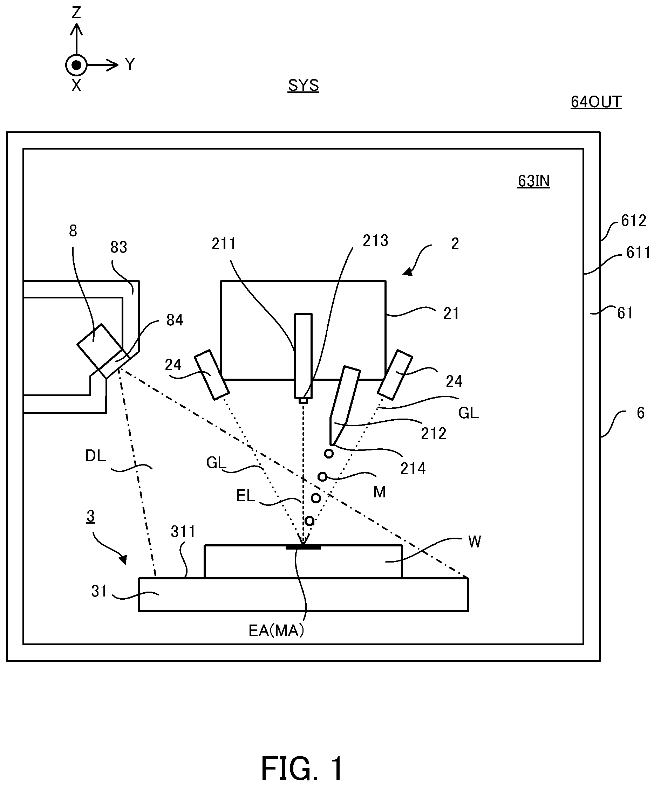

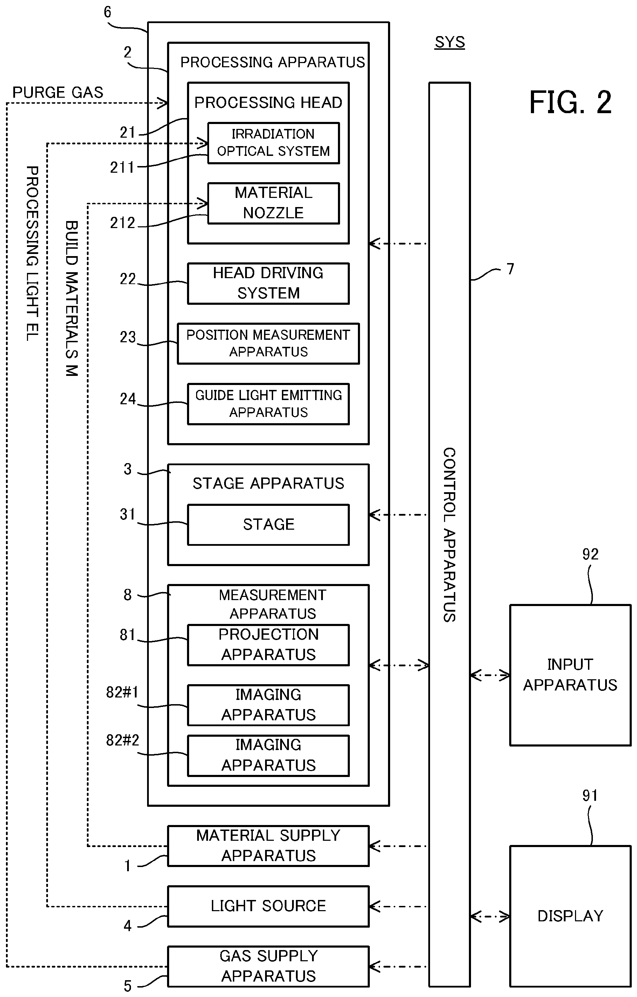

Firstly, with reference to FIG. 1 and FIG. 2, a structure of the processing system SYS in the present embodiment will be described. FIG. 1 is a cross-sectional view that illustrates one example of the structure of the processing system SYS in the present embodiment. FIG. 2 is a system configuration diagram that illustrates one example of a system configuration of the processing system SYS in the present embodiment.

The processing system SYS is configured to form the three-dimensional structural object ST (namely, a three-dimensional object having a size in each of three-dimensional directions, and a solid object). The processing system SYS is configured to form the three-dimensional structural object ST on the workpiece W that is a base for forming the three-dimensional structural object ST. The workpiece W may be referred to as a base member or a basement. The processing system SYS is configured to form the three-dimensional structural object ST on the workpiece W by performing the additive processing on the workpiece W. When the workpiece W is a below described stage 31, the processing system SYS is configured to form the three-dimensional structural object ST on the stage 31. When the workpiece W is an existing structural object held by the stage 31 (alternatively, placed on the stage 31), the processing system SYS is configured to form the three-dimensional structural object ST on the existing structural object. In this case, the processing system SYS may form the three-dimensional structural object ST that is integrated with the existing structural object. An operation for forming the three-dimensional structural object ST that is integrated with the existing structural object may be regarded to be equivalent to an operation for adding a new structural object to the existing structural object. Note that the existing structural object may be an item that needs to be repaired having a missing part, for example. The processing system SYS may form the three-dimensional structural object ST on the item that needs to be repaired to fill in the missing part of the item that needs to be repaired. Alternatively, the processing system SYS may form the three-dimensional structural object ST that is separable from the existing structural object. Note that FIG. 1 illustrates an example in which the workpiece W is an existing structural object held by the stage 31. The below described description also uses the example in which the workpiece W is an existing structural object held by the stage 31.

As described above, the processing system SYS is configured to form the three-dimensional structural object ST by the Laser Metal Deposition. Namely, it can be said that the processing system SYS is a 3D printer that forms an object by using an Additive layer manufacturing technique. Note that the Additive layer manufacturing technique may be referred to as a Rapid Prototyping, a Rapid Manufacturing or an Additive Manufacturing.

In order to form the three-dimensional structural object ST, the processing system SYS is provided with a material supply apparatus 1, a processing apparatus 2, a stage apparatus 3, a light source 4, a gas supply apparatus 5, a housing 6, a control apparatus 7, a measurement apparatus 8, a display 91 and an input apparatus 92, as illustrated in FIG. 1 and FIG. 2. At least a part of the processing apparatus 2, the stage apparatus 3 and the measurement apparatus 8 is housed in a chamber space 63IN in the housing 6.

The material supply apparatus 1 supplies the build materials M to the processing apparatus 2. The material supply apparatus 1 supplies, to the processing apparatus 2, the build materials M the amount of which is necessary for the processing apparatus 2 to form the three-dimensional structural object ST per unit time by supplying a desire amount of the build materials M based on the necessary amount.

The build material M is a material that is molten by an irradiation of the processing light EL having a predetermined intensity or more intensity. At least one of a metal material and a resin material is usable as the build material M, for example. However, another material that is different from the metal material and the resin material may be used as the build material M. The build materials M are powder-like materials. Namely, the build materials M are powdery materials. The powdery materials may include not only the powder-like materials but also grain-like materials. The build materials M may include the powdery material a particle size of which is within a range of 90 micrometer ± 40 micrometer, for example. An average particle size of the powdery materials included in the build materials M may be 75 micrometer or another size, for example. However, the build materials M may not be the powdery materials, and a wire-shaped material or a gaseous material may be used, for example. Note that the processing system SYS may form the build object by processing the build materials M with an energy beam such as a charged particle beam.

The processing apparatus 2 forms the three-dimensional structural object ST by using the build materials M supplied from the material supply apparatus 1. **In** order to form the three-dimensional structural object ST by using the build materials M, the processing apparatus 2 is provided with a processing head 21, a head driving system 22, a position measurement apparatus 23 and a plurality of (for example, two) guide light emitting apparatuses 24. Moreover, the processing head 21 is provided with an irradiation optical system 211 and a material nozzle 212 (namely, a supply system that supplies the build materials M). The processing head 21 and the head driving system 22 are housed in the chamber space 63IN. However, at least a part of the processing head 21 and / or the head driving system 22 may be disposed in an external space 64OUT that is a space at the outside of the housing 6. Note that the external space 64OUT may be a space in which an operator of the processing system SYS is allowed to enter. Note that the processing apparatus 2 may be referred to as a build apparatus, because it is an apparatus that builds the three-dimensional structural object ST that is the build object. The processing apparatus 2 may be referred to as an additive processing apparatus, because it is an apparatus that forms the three-dimensional structural object ST that is the build object by the additive processing.

The irradiation optical system 211 is an optical system (for example, a condensing optical system) for emitting the processing light EL from an emitting part 213. Specifically, the irradiation optical system 211 is optically connected to the light source 4 that generates the processing light EL through a non-illustrated light transmitting member such as an optical fiber and light pipe. The irradiation optical system 211 emits the processing light EL transmitted from the light source 4 through the light transmitting member. The irradiation optical system 211 emits the processing light EL so that the processing light EL propagates in the chamber space 63IN. The irradiation optical system 211 emits the processing light EL in a downward direction (namely, toward a -Z side) from the irradiation optical system 211. The stage 31 is disposed below the irradiation optical system 211. When the workpiece W is placed on the stage 31, the irradiation optical system 211 emits the processing light EL toward the workpiece W. Specifically, the irradiation optical system 211 irradiates an irradiation area EA that is set on the workpiece W as an area that is irradiated with the processing light EL (typically, in which the light is condensed). Moreover, a state of the irradiation optical system 211 is switchable between a state where the irradiation area EA is irradiated with the processing light EL and a state where the irradiation area EA is not irradiated with the processing light EL under the control of the control apparatus 7. Note that a direction of the processing light EL emitted from the irradiation optical system 211 is not limited to a direct downward direction (namely, coincident with the -Z axis direction), and may be a direction that is inclined with respect to the Z axis by a predetermined angle, for example.

The material nozzle 212 has a supply outlet 214 that supplies the build materials M. The material nozzle 212 supplies (specifically, injects, blows out or sprays) the build materials M from the supply outlet 214. The material nozzle 212 is physically connected to the material supply apparatus 1 that is a supply source of the build materials M through a non-illustrated pipe and the like. The material nozzle 212 supplies the build materials M supplied from the material supply apparatus 1 through the pipe. The material nozzle 212 may pressure-feed the build materials M supplied from the material supply apparatus 1 through the pipe. Namely, the build materials M from the material supply apparatus 1 and gas (for example, inert gas such as Nitrogen or Argon) for feeding are mixed and pressure-fed to the material nozzle 212 through the pipe. In this case, purge gas supplied from the gas supply apparatus 5 may be used as the gas for feeding, for example. Note that although the material nozzle 212 is illustrated to have a tube-like shape in FIG. 1, the shape of the material nozzle 212 is not limited to this shape. The material nozzle 212 supplies the build materials M toward the chamber space 63IN. The material nozzle 212 supplies the build materials M in a downward direction (namely, toward the -Z side) from the material nozzle 212. The stage 31 is disposed below the material nozzle 212. When the workpiece W is loaded on the stage 31, the material nozzle 212 supplies the build materials M toward the workpiece W. Note that although a moving direction of the build materials M supplied from the material nozzle 212 is a direction that is inclined with respect to the Z axis by a predetermined angle (as one example, an acute angle), it may be the -Z axis direction (namely, a direct downward direction).

In the present embodiment, the material nozzle 212 is aligned with the irradiation optical system 211 so as to supply the build materials M to the irradiation area EA that is irradiated with the processing light EL by the irradiation optical system 211. Namely, the material nozzle 212 is aligned with the irradiation optical system 211 so that the irradiation area EA is coincident with (alternatively, at least partially overlaps with) a supply area MA that is set on the workpiece W as an area to which the material nozzle 212 supplies the build materials M. Note that the material nozzle 212 may aligned so as to supply the build materials M to a melt pool MP that is formed by the processing light EL emitted from the irradiation optical system 211.

The head driving system 22 moves the processing head 21. The head driving system 22 moves the processing head 21 in the chamber space 63IN, for example. The head driving system 22 moves the processing head 21 along at least one of the X axis, the Y axis and the Z axis. When the processing head 21 moves along at least one of the X axis and the Y axis, each of the irradiation area EA and the supply area MA moves on the workpiece W along at least one of the X axis and the Y axis. Furthermore, the head driving system 22 may move the processing head 21 along a rotational direction that includes at least one of the θX direction, the θY direction and the θZ direction, in addition to or instead of at least one of the X axis, the Y axis and the Z axis. In other words, the head driving system 22 may rotate the processing head 21 around at least one of the X axis, the Y axis and the Z axis. The head driving system 22 may change an attitude of the processing head 21 around at least one of the X axis, the Y axis and the Z axis. The head driving system 22 includes an actuator such as a motor, for example.

Note that the head driving system 22 may move the irradiation optical system 211 and the material nozzle 212 separately. Specifically, for example, the head driving system 22 may be configured to adjust at least one of a position of the emitting part 213, a direction of the emitting part 213, a position of the supply outlet 214 and a direction of the supply outlet 214. **In** this case, the irradiation area EA that is irradiated with the processing light EL by the irradiation optical system 211 and the supply area MA to which the material nozzle 212 supplies the build materials M are controllable separately.

The position measurement apparatus 23 is configured to measure a position of the processing head 21. The position measurement apparatus 23 may include at least one of an encoder and a laser interferometer, for example.

The guide light emitting apparatus 24 is disposed at the processing head 21. The guide light emitting apparatus 24 emits guide light GL. The guide light emitting apparatus 24 emits guide light GL so that the guide light GL propagates in the chamber space 63IN. The plurality of guide light emitting apparatuses 24 are aligned with each other so that a plurality of guide lights GL that are emitted from the plurality of guide light emitting apparatuses 24, respectively, intersect with each other at a certain position below the processing head 21. Especially, the plurality of guide light emitting apparatuses 24 are aligned with each other so that the plurality of guide lights GL intersect with each other at a light concentration position of the processing light EL. It can be said that the plurality of guide light emitting apparatuses 24 are aligned with each other so that the plurality of guide lights GL intersect with each other at an additive processed position at which the processing apparatus 2 performs the additive processing, because the processing apparatus 2 processes the object (namely, performs the additive processing) mainly at the light concentration position of the processing light EL. Note that a usage of the guide emitting apparatuses 24 will be described later in detail. Note that the alignment may be performed so that the plurality of guide lights GL intersect with each other at a position (a defocus position) that is distant from the light concentration position of the processing light EL.

The stage apparatus 3 is provided with the stage 31. The stage 31 is housed in the chamber space 63IN. The stage 31 is configured to support the workpiece W. Note that a state where "the stage 31 supports the workpiece W" here may mean a state where the workpiece W is directly or indirectly supported by the stage 31. The stage 31 may be configured to hold the workpiece W. Namely, the stage 31 may support the workpiece W by holding the workpiece W. Alternatively, the stage 31 may not be configured to hold the workpiece W. **In** this case, the workpiece W may be placed on the stage 31. Namely, the stage 31 may support the workpiece W placed on the stage 31. **In** this case, the workpiece W may be placed on the stage 31 without a clamp. Therefore, the state where "the stage 31 supports the workpiece W" in the present embodiment may include a state where the stage 31 holds the workpiece W and a state where the workpiece W is placed on the stage 31. The stage 31 may be referred to as a support apparatus that supports the workpiece W, a placement apparatus on which the workpiece W is placed, a holding apparatus that holds the workpiece W or a table. Since the stage 31 is housed in the chamber space 63IN, the workpiece W supported by the stage 31 is also housed in the chamber space 63IN. Moreover, the stage 31 may be configured to release the held workpiece W, when the workpiece W is held. The above described irradiation optical system 211 emits a processing beam PL in at least a part of a period when the stage 31 supports the workpiece W. Moreover, the above described material nozzle 212 supplies the build materials M in at least a part of the period when the stage 31 supports the workpiece W. Note that there is a possibility that a part of the build materials M supplied by the material nozzle 212 is scattered or falls to the outside of the workpiece W (for example, around the stage 31) from a surface of the workpiece W. Thus, the processing system SYS may be provided with a recovery apparatus that recovers the build material M scattered or falling around the stage 31. Note that the stage 31 may be provided with a mechanical chuck, a vacuum chuck and the like in order to hold the workpiece W.

The light source 4 emits, as the processing light EL, at least one of an infrared light and an ultraviolet light, for example. However, another type of light, for example, a light in a visible range may be used as the processing light EL. The processing light EL is a laser light. In this case, the light source 4 may include a laser light source such as a semiconductor laser. At least one of a Laser Diode (LD)), a fiber laser, a CO₂ laser, a YAG laser, an Excimer laser and the like is one example of the laser light source. However, the processing light EL may not be the laser light and the light source 4 may include any light source (for example, at least one of a LED (Light Emitting Diode), a discharge lamp and the like).

The gas supply apparatus 5 is a supply source of the purge gas for purging the chamber 631IN. The purge gas includes inert gas. The Nitrogen gas or Argon gas is one example of the inert gas. The gas supply apparatus 5 supplies the purge gas to the chamber space 63IN. As a result, the chamber space 63IN is a space that is purged by the purge gas. Note that the gas supply apparatus 5 may be a tank that stores the inert gas such as the Nitrogen gas or the Argon gas. When the purge gas is the Nitrogen gas, the gas supply apparatus 5 may be a Nitrogen gas generation apparatus that generates the Nitrogen gas by using air as material.

The housing 6 is a housing apparatus that houses at least a part of each of at least the processing apparatus 2 and the stage apparatus 3 in the chamber space 63IN that is an internal space of the housing 6. The housing 6 is provided with a wall member 61 that forms the chamber space 63IN. The wall member 61 is a member that separates the chamber space 63IN from the external space 64OUT at the outside of the housing 6. The wall member 61 faces the chamber space 63IN through its inner wall 611 and faces the external space 64OUT through its outer wall 612. In this case, a space surrounded by the wall member 61 (more specifically, a space surrounded by the inner wall 611 of the wall member 61) is the chamber space 63IN. Note that an openable and closable door may be disposed at the wall member 61. The door may be opened when the workpiece W is to be placed on the stage 31 and the workpiece W and / or a build object is unloaded from the stage 31 and may be closed when the build is performed.

The control apparatus 7 controls an operation of the processing system SYS. The control apparatus 7 may include a CPU (Central Processing Unit) (alternatively, a GPU (Graphic Processing Unit) in addition to or instead of the CPU) and a memory, for example. The control apparatus 7 serves as an apparatus for controlling the operation of the processing system SYS by means of the CPU executing a computer program. The computer program is a computer program that allows the control apparatus 7 (for example, the CPU) to execute (namely, to perform) a below described operation that should be executed by the control apparatus 7. Namely, the computer program is a computer program that allows the control apparatus 7 to function so as to make the processing system SYS execute the below described operation. The computer program executed by the CPU may be recorded in the memory (namely, a recording medium) of the control apparatus 7, or may be recorded in any recording medium (for example, a hard disk or a semiconductor memory) that is built in the control apparatus 7 or that is attachable to the control apparatus 7. Alternatively, the CPU may download the computer program that should be executed from an apparatus disposed at the outside of the control apparatus 7 through a network interface.

For example, the control apparatus 7 may control an emitting aspect of the processing light EL by the irradiation optical system 211. The emitting aspect may include at least one of an intensity of the processing light EL and an emitting timing of the processing light EL, for example. When the processing light EL is a pulse light, the emitting aspect may include a ratio (a duty ratio) of a length of an ON time of the pulse light and an emission cycle of the pulse light, for example. Moreover, the emission aspect may include the length of the ON time of the pulse light itself and the emission cycle itself, for example. Moreover, the control apparatus 7 may control a moving aspect of the processing head 21 by the head driving system 22. The moving aspect may include at least one of a moving distance, a moving speed, a moving direction and a moving timing, for example. Moreover, the control apparatus 7 may controls a supply aspect of the build materials M by the material supply apparatus 1. The supply aspect of the build materials M by the material nozzle 212 is mainly determined on the basis of the supply aspect of the build materials M by the material supply apparatus 1. Thus, controlling the supply aspect of the build materials M by the material supply apparatus 1 may be regarded to control the supply aspect of the build materials M by the material nozzle 212. The supply aspect may include at least one of the supplied amount (especially, the supplied amount per unit time) and a supply timing.

The control apparatus 7 may not be disposed in the processing system SYS, and may be disposed at the outside of the processing system SYS as a server or the like. In this case, the control apparatus 7 may be connected to the processing system SYS through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the processing system SYS may be configured to transmit and receive various information through the network. Moreover, the control apparatus 7 may be configured to transmit an information such as a command and a control parameter to the processing system SYS through the network. The processing system SYS may be provided with a receiving apparatus that receives the information such as the command and the control parameter from the control apparatus 7 through the network. The processing system SYS may be provided with a transmitting apparatus that transmits the information such as the command and the control parameter to the control apparatus 7 through the network (namely, an output apparatus that outputs the information to the control apparatus 7). Alternatively, a first control apparatus that performs a part of the processing performed by the control apparatus 7 may be disposed in the processing system SYS and a second control apparatus that performs another part of the processing performed by the control apparatus 7 may be disposed at the outside of the processing system SYS.

Note that the recording medium recording therein the computer program that is executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. Moreover, the recording medium may include a device that is configured to record the computer program (for example, a device for a universal use or a device for an exclusive use in which the computer program is embedded to be executable in a form of at least one of a software, a firmware and the like). Moreover, various processes or functions included in the computer program may be realized by a logical process block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes an partial element of the hardware are combined.

The measurement apparatus 8 is configured to measure a measurement target object under the control of the control apparatus 7. Specifically, the measurement apparatus 8 is configured to measure a measurement target object under the control of the control apparatus 7. A measured result by the measurement apparatus 8 is outputted from the measurement apparatus 8 to the control apparatus 7.

The measurement may include a measurement of a position of the measurement target object. The position of the measurement target object may include a position of each segmentalized part (namely, each portion) of the measurement target object in at least one of the X axis direction, the Y axis direction and the Z axis direction. The position of the measurement target object may include a position of a surface of the measurement target object. The position of the surface of the measurement target object may include a position of each segmentalized part (namely, each portion) of the surface of the measurement target object in at least one of the X axis direction, the Y axis direction and the Z axis direction. The measurement may include a measurement of a shape (for example, a three-dimensional shape) of the measurement target object. The shape of the measurement target object may include a direction of each segmentalized part of the workpiece W (for example, a direction of a normal line of each part, and this is equivalent to an inclination amount of each part with respect to at least one of the X axis direction, the Y axis direction and the Z axis direction). The shape of the measurement target object may include a shape of the surface of the measurement target object. The shape of the surface of the measurement target object may include a direction of each segmentalized part of the surface of the workpiece W (for example, a direction of a normal line of each part, and this is equivalent to an inclination amount of each part with respect to at least one of the X axis direction, the Y axis direction and the Z axis direction (namely, an attitude of each part)). Note that the measurement may include a measurement of an attribute of the measurement target object such as a reflectance, a spectral reflectance, a surface roughness and so on.

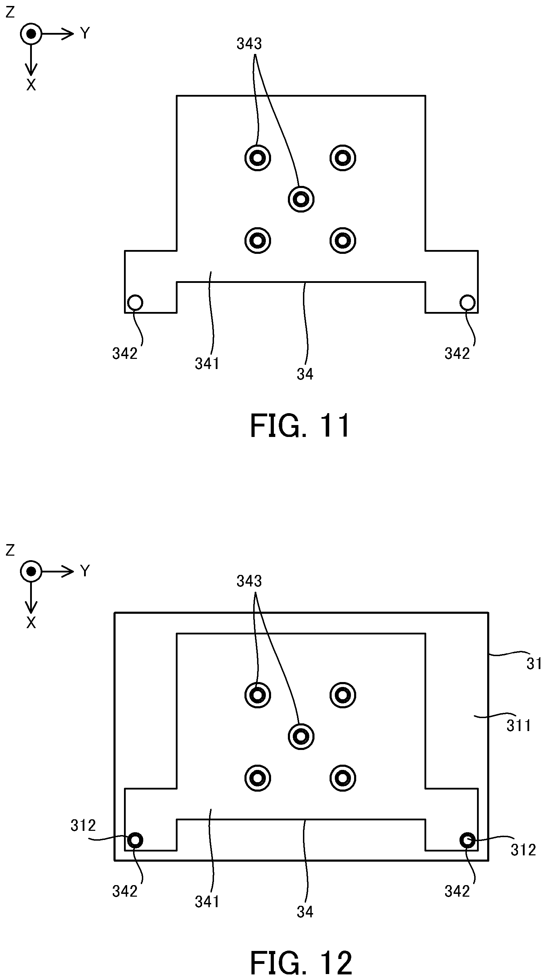

In the present embodiment, the measurement target object include an object placed on the placement surface 311 of the stage 31, for example. Thus, a measurement range of the measurement apparatus 8 is set to a desired range so as to measure the object placed on the placement surface 311. The above described workpiece W is one example of the object placed on the placement surface 311. A below described fiducial member 34 (see FIG. 11 and so on) is another example of the object placed on the placement surface 311.

The measurement apparatus 8 may have any structure as long as it is configured to measure the measurement target object. The measurement apparatus 8 may be any type of measurement apparatus as long as it is configured to measure the measurement target object. FIG. 1 and FIG. 2 illustrates an example in which the measurement apparatus 8 is a 3D scanner. Namely, FIG. 1 and FIG. 2 illustrates an example in which the measurement apparatus 8 optically measures the measurement target object. FIG. 1 and FIG. 2 illustrates an example in which the measurement apparatus 8 measures the measurement target object without contacting with the measurement target object. However, the measurement apparatus 8 may measure the measurement target object by using a method, which is different from the optical method, for example, by using electromagnetic wave or ultrasonic wave. The measurement apparatus 8 may measure the measurement target object by contacting with the measurement target object. A measurement apparatus that measures the measurement target object while pressing a sensor such as a probe or the like against the measurement target object is one example of the measurement apparatus that measures the measurement target object by contacting with the measurement target object.

When the measurement apparatus 8 is the 3D scanner, the measurement apparatus 8 is provided with a projection apparatus 81 and an imaging apparatus 82, as illustrated in FIG. 2. **In** an example illustrated in FIG. 2, the measurement apparatus 8 is provided with a plurality of imaging apparatuses 82. More specifically, in an example illustrated in FIG. 2, the measurement apparatus 8 is provided with two imaging apparatuses 82 (specifically, the imaging apparatus 82#1 and the imaging apparatus 82#2). However, the measurement apparatus 8 may be provided with a single imaging apparatus 82.

The projection apparatus 81 irradiates measurement light DL with the placement surface 311. The measurement light DL is light for projecting a desired projection pattern on the placement surface 311. The measurement light DL is light for projecting the desired projection pattern on the measurement target object placed on the placement surface 311. The desired projection pattern may include one-dimensional pattern. The desired projection pattern may include two-dimensional pattern. The projection apparatus 81 may project a single type of projection pattern on the measurement target object. Alternatively, the projection apparatus 81 may project a plurality of types of projection patterns on the measurement target object in sequence.

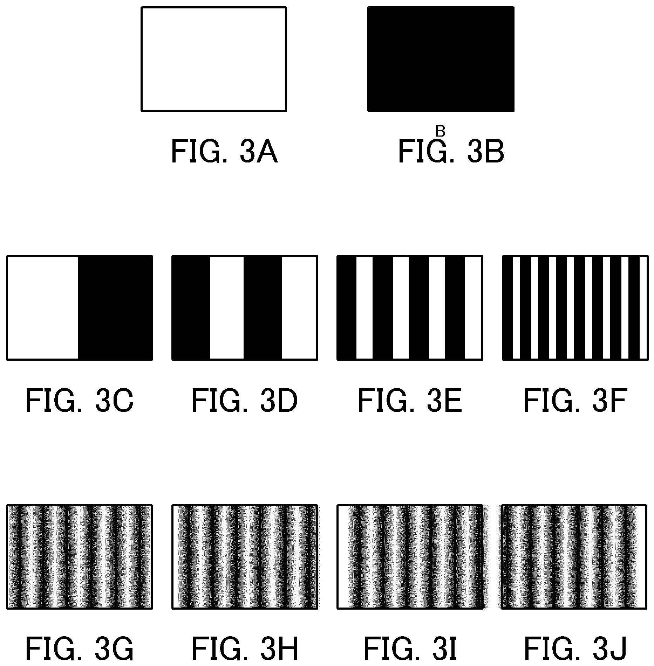

FIG. 3A to FIG. 3J illustrate examples of the projection pattern. FIG. 3A illustrates the projection pattern that corresponds to a white image. FIG. 3B illustrates the projection pattern that corresponds to a black image. FIG. 3A and FIG. 3B may be used to measure a state of environmental light. FIG. 3C to FIG. 3F illustrate a plurality of projection patterns that correspond to stripe patterns that are different from each other (for example, a plurality of projection patterns the numbers and widths of the stripe of which are different from each other). FIG. 3G to FIG. 3J illustrate a plurality of projection patterns that correspond to gray patterns (in other word, phase shift patterns) phases of which are different from each other.

The projection apparatus 8 may project the plurality of projection patterns illustrated in FIG. 3A and FIG. 3B in sequence, then project the plurality of projection patterns illustrated in FIG. 3C to FIG. 3F in sequence, and then project the plurality of projection patterns illustrated in FIG. 3G to FIG. 3J in sequence. In this case, a cycle width of a gray code included in the projection pattern illustrated in each of FIG. 3G to FIG. 3J may be equal to a minimum width of the stripe included in the projection pattern illustrated in each of FIG. 3C to FIG. 3F. Note that a stereo phase shift method is one example of a method of imaging the measurement target object on which the phase shift pattern is projected by using the plurality of imaging apparatuses 82 to measure a state of the measurement target object.

The imaging apparatus 82 images the placement surface 311. The imaging apparatus 82 images the measurement target object placed on the placement surface 311. Especially, the imaging apparatus 82 images the projection pattern projected on the measurement target object. The control apparatus 7 generates measurement information relating to the state of the measurement target object measured by the measurement apparatus 8 (namely, measurement information relating to a measured result of the measurement target object by the measurement apparatus 8) on the basis of an imaged result by the imaging apparatuses 82 (especially, information relating to the imaged projection patterns). Since the measurement of the measurement target object includes at least one of a position measurement and a shape measurement of the measurement target object, the measurement information may include at least one of measurement position information relating to the position of the measurement target object measured by the measurement apparatus 8 and measurement shape information relating to the shape of the measurement target object measured by the measurement apparatus 8. In this case, the control apparatus 7 may be configured to serve as an information generation apparatus for generating the measurement information (namely, at least one of the measurement position information and the measurement shape information).

The measurement information may include either one of the measurement position information and the measurement shape information. The measurement information may include both of the measurement position information and the measurement shape information. Especially, the measurement information may be information in which the measurement position information is associated with the measurement shape information. "A measurement state information in which the measurement position information is associated with the measurement shape information" means information from which both of the position and the shape of each part of the measurement target object is determinable. Thus, when the measurement state information is used, a situation does not occur where the position of a certain part of the measurement target object is determinable but the shape of the same part of the measurement target object is not determinable. In the below describe description, an example in which the measurement information is the information in which the measurement position information is associated with the measurement shape information will be described, for convenience of the description. Note that this measurement information may not include the measurement position information and the measurement shape information as separate and independent different information, and the measurement information may have any data structure as long as both of the position and the shape of each part of the measurement target object are determinable.

The measurement apparatus 8 is isolated from the chamber space 63IN by a wall member 83. The measurement apparatus 8 is disposed in a space that is isolated from the chamber space 63IN by the wall member 83. This prevents substance existing in the chamber space 63IN from being attached to the measurement apparatus 8. Note that there is a possibility that the build material M supplied from the material nozzle 212 to the chamber space 63IN and a substance that is generated from a below described build surface MS due to the irradiation of the processing light EL exist as one example of the substance existing in the chamber space 63IN. Fume including at least one of a micro particle of the molten build material M and a micro particle of a molten material of the workpiece W is one example of the substance that is generated from the below described build surface MS due to the irradiation of the processing light EL.

The wall member 83 is provided with a light transmission member 84 through which the measurement light DL is allowed to pass and by which the above described substance is blocked at a position where an optical path of the measurement light DL emitted from the projection apparatus 81 intersects with the wall member 83. As a result, even when the measurement apparatus 8 is isolated from the chamber space 63IN by the wall member 83, the measurement apparatus 8 properly irradiates the measurement target object disposed in the chamber space 63IN with the measurement light DL. Note that the measurement apparatus 8 may not be isolated from the chamber space 63IN by the wall member 83. For example, the measurement apparatus 8 may be disposed in the chamber space 63IN. When the measurement apparatus 8 is disposed in the chamber space 63IN, the measurement apparatus 8 may be dust resistant.

The display 91 is a display device that is configured to display a desired image under the control of the control apparatus 7. For example, the display 91 may display information relating to the processing system SYS. For example, the display 91 may display information relating to the three-dimensional structural object ST. For example, the display 91 may display information relating to the workpiece W. For example, the display 91 may display information to the imaged result by the imaging apparatuses 82.

Note that the display 91 may not be disposed in the processing system SYS. For example, the display 91 may be disposed at an outside of the processing system SYS as an external display. In this case, the display 91 may be connected to the processing system SYS by a wired and / or wireless network (alternatively, a cable, a data bus and / or a communication line). In this case, the control apparatus 7 may be configured to transmit and receive (namely, input and output) various types of information to and from the display 91 through the network. The display 91 may be provided with: a transmitting and receiving part (namely, an inputting and outputting part) that transmits / receives information to / from the control apparatus 7 (furthermore, to / from another apparatus of the processing system SYS through or without the control apparatus 7); and a display part that displays the image.

The input apparatus 92 is an apparatus that receives an input of information from the outside of the processing system SYS. For example, the input apparatus 92 may receive the input of the information from a user of the processing system SYS. For example, the input apparatus 92 may receive the input of the information from an apparatus at the outside of the processing system SYS. For example, the input apparatus 92 may receive the input of the information from a recording medium that is attachable to the processing system SYS. An operation apparatus that is operable by the user is one example of the input apparatus 92. At least one of a keyboard, a mouse, a touch pad, a touch panel (for example, a touch panel that is integrated with the display 91) and a pointing device is one example of the operation apparatus. An interface apparatus for connecting to the apparatus at the outside of the processing system SYS is another example of the input apparatus 92. A reading apparatus that is configured to read the recording medium that is attachable to the processing system SYS is another example of the input apparatus 92. The information the input of which is received by the input apparatus 92 (namely, the information inputted to the input apparatus 92) is outputted to the control apparatus 7, for example.

The input apparatus 92 may receive the input of the information through a display screen of the display 91. For example, the input apparatus 92 may receive the input of the information through a GUI (graphical user interface) displayed on the display screen of the display 91. For example, the input apparatus 92 may receive the input of the information regarding a user's operation of the GUI displayed on the display screen of the display 91. In this case, the display 91 may display an image (for example, the above described GUI) for receiving the input of the information through the input apparatus 92 under the control of the control apparatus 7. In this way, the display apparatus may also serve as the input apparatus 92.

Note that the input apparatus 92 may not be disposed in the processing system SYS. For example, the input apparatus 92 may be disposed at an outside of the processing system SYS as an external input apparatus. In this case, the input apparatus 92 may be connected to the processing system SYS by a wired and / or wireless network (alternatively, a cable, a data bus and / or a communication line). In this case, the control apparatus 7 may be configured to receive the information inputted to the input apparatus 92 through the network. In other word, the control apparatus 7 may be configured to serve as a receiving apparatus that receives the information inputted to the input apparatus 92 through the network. The input apparatus 92 may be provided with: a transmitting and receiving part (namely, and inputting and outputting part) that transmits / receives information to / from the control apparatus 7 (furthermore, to / from another apparatus of the processing system SYS through or without the control apparatus 7); and an input receiving part that receives an input from the outside of the processing system SYS.

### (2) Operation of Processing System SYS

Next, a flow of an operation of the processing system SYS will be described. In the present embodiment, the processing system SYS performs a workpiece model alignment operation under the control of the control apparatus 7. Then, the processing system SYS performs a processing model alignment operation under the control of the control apparatus 7. Then, the processing system SYS performs a processing operation under the control of the control apparatus 7. Moreover, the processing system SYS may perform a coordinate matching operation before the workpiece model alignment operation under the control of the control apparatus 7. Thus, in the below described description, the coordinate matching operation, the workpiece model alignment operation, the processing model alignment operation and the processing operation will be described in sequence.

### (2-1) Coordinate Matching Operation

Firstly, the coordinate matching operation will be described. The coordinate matching operation is an operation for associating a processing coordinate system, a stage coordinate system and a measurement coordinate system with one another. The processing coordinate system is a three-dimensional coordinate system that is used to determine the position of the processing head 21. For example, the head driving system 22 moves the processing head 21 on the basis of information relating to the position of the processing head 21 determined in a head coordinate system. For example, the position measurement apparatus 23 measures the position of the processing head 21 in the head coordinate system. The stage coordinate system is a three-dimensional coordinate system that is used to determine the position of the stage 31. When the stage 31 is movable by a below described stage driving system, the stage driving system moves the stage 31 on the basis of information relating to the position of the stage 31 determined in the stage coordinate system. The measurement coordinate system is a three-dimensional coordinate system that is used to determine the position of the measurement target object measured by the measurement apparatus 8. Namely, the measurement coordinate system is a three-dimensional coordinate system that is used to determine a position in a measurement range of the measurement apparatus 8. The control apparatus 7 generates the measurement position information relating to the position of the measurement target object in the measurement coordinate system on the basis of the measured result by the measurement apparatus 8.

When the processing coordinate system, the stage coordinate system and the measurement coordinate system are associated with one another, a coordinate of a certain position in either one coordinate system of the processing coordinate system, the stage coordinate system and the measurement coordinate system is convertible to a coordinate of a certain position in another coordinate system of the processing coordinate system, the stage coordinate system and the measurement coordinate system. Therefore, it can be said that the coordinate matching operation is equivalent to an operation of obtaining information (for example, a conversion matrix) for converting a coordinate in the processing coordinate system to a coordinate in each of the stage coordinate system and the measurement coordinate system, information (for example, a conversion matrix) for converting a coordinate in the stage coordinate system to a coordinate in each of the processing coordinate system and the measurement coordinate system and information (for example, a conversion matrix) for converting a coordinate in the measurement coordinate system to a coordinate in each of the processing coordinate system and the stage coordinate system.

Note that the processing system SYS may not perform the coordinate matching operation, when the information (for example, the information relating to the conversion matrix) obtained by the coordinate matching operation is already known to the control apparatus 7. For example, when the information obtained by the coordinate matching operation is inputted to the processing system SYS through the input apparatus 92, the processing system SYS may not perform the coordinate matching operation.

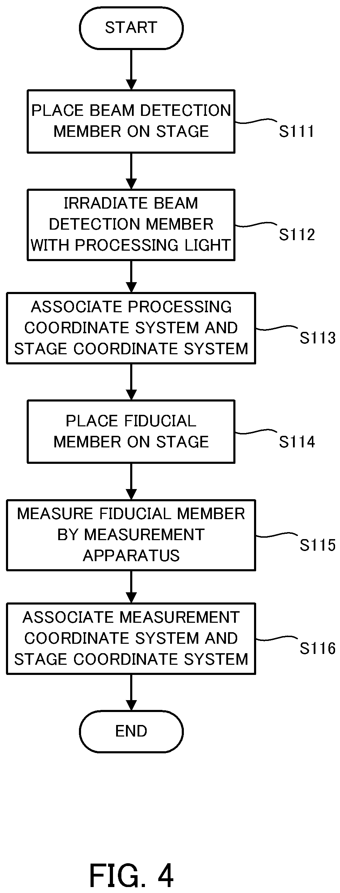

Next, with reference to FIG. 4, a flow of this coordinate matching operation will be described. FIG. 4 is a flowchart that illustrates the flow of this coordinate matching operation.

As illustrated in FIG. 4, the processing system SYS performs, as a part of the coordinate matching operation, an operation of associating the processing coordinate system with the stage coordinate system (a step S111 to a step S113). Furthermore, the processing system SYS performs, as a part of the coordinate matching operation, an operation of associating the measurement coordinate system with the stage coordinate system (a step S114 to a step S116). When the processing coordinate system is associated with the stage coordinate system and the measurement coordinate system is associated with the stage coordinate system, the processing coordinate system is indirectly associated with the measurement coordinate system through the stage coordinate system. Thus, the processing coordinate system, the stage coordinate system and the measurement coordinate system are associated with one another by performing the processes from the step S111 to the step S116.

FIG. 4 illustrates an example in which the processing system SYS performs the operation of associating the measurement coordinate system with the stage coordinate system after performing the operation of associating the processing coordinate system with the stage coordinate system. However, the processing system SYS may perform the operation of associating the processing coordinate system with the stage coordinate system after performing the operation of associating the measurement coordinate system with the stage coordinate system.

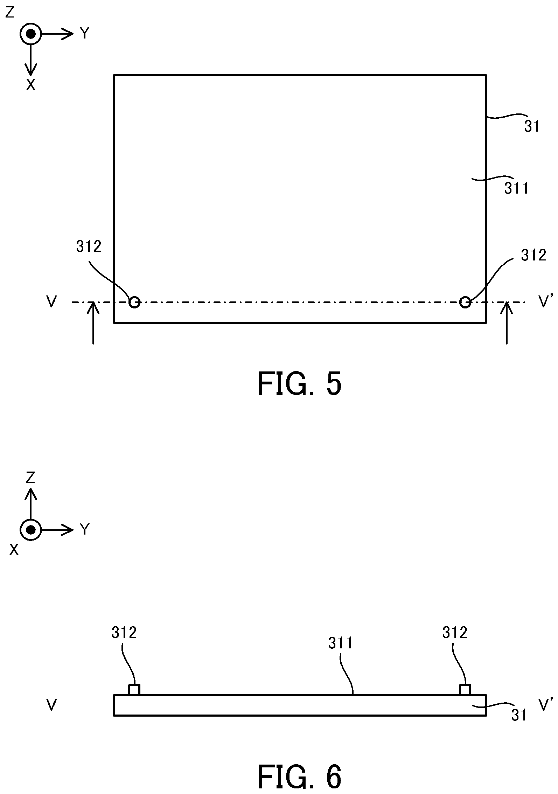

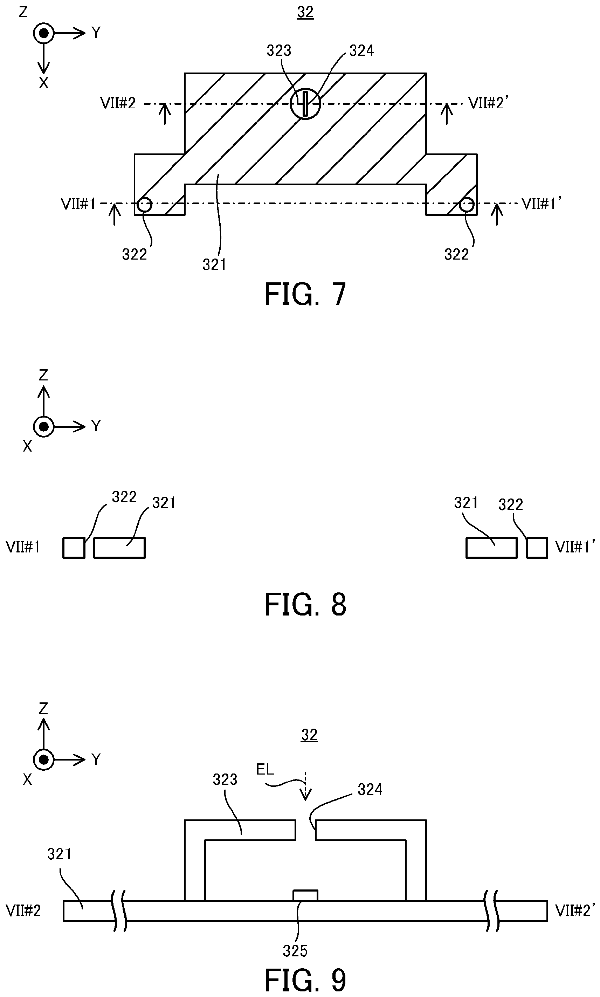

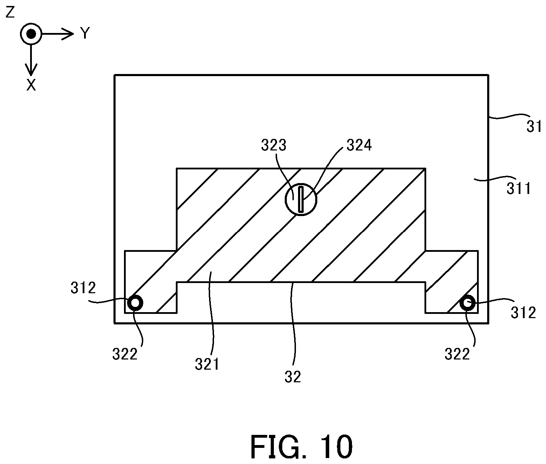

In order to associate the processing coordinate system with the stage coordinate system, firstly, a beam detection member 32 is placed on the placement surface 311 of the stage 31 (the step S111). Especially, the beam detection member 32 is placed on the placement surface 311 so that a positional relationship between the beam detection member 32 and the placement surface 311 is a desired first positional relationship. In the present embodiment, in order to place the beam detection member 32 on the placement surface 311 so that the positional relationship between the beam detection member 32 and the placement surface 311 is the desired first positional relationship, a mark for an alignment is formed on each of the beam detection member 32 and the placement surface 311. Next, with reference to FIG. 5 to FIG. 10, examples of the placement surface 311 and the beam detection member 32 on which the marks for the alignment are formed will be described. FIG. 5 is a planar view that illustrates the stage 31 including the placement surface 311 on which the mark for the alignment is formed. FIG. 6 is a V-V' cross-sectional view of the stage 31 illustrated in FIG. 5. FIG. 7 is a planer view that illustrates the beam detection member 32 on which the mark for the alignment is formed. FIG. 8 is a VII#1-VII#1' cross-sectional view of the beam detection member 32 illustrated in FIG. 7. FIG. 9 is a VII#2-VII#2' cross-sectional view of the beam detection member 32 illustrated in FIG. 7. FIG. 10 is a planer view that illustrates the beam detection member 32 placed on the placement surface 311.

As illustrated in FIG. 5 and FIG. 6, a plurality of pins 312 are formed on the placement surface 311 as the marks for the alignment. Although two pins 312 are formed on the placement surface 311 in an example illustrated in FIG. 5 and FIG. 6, three or more pins 312 may be formed on the placement surface 311. The pin 312 is a member that protrudes from the placement surface 311 along the Z axis direction. Note that information relating to positions of the pins 312 in the stage coordinate system is information that is already known to the control apparatus 7.

As illustrated in FIG. 7 to FIG. 9, the beam detection member 32 is provided with a base member 321. The base member 321 is a plate-shaped member. The base member 321 has a shape and a size that allow it to be placed on the placement surface 311. A plurality of through-holes 322 are formed in the base member 321 as the marks for the alignment. Two through-holes 322 are formed in the base member 321 in an example illustrated in FIG. 7 and FIG. 8. The through-hole 322 penetrates the base member 321 along the Z axis direction.

In the present embodiment, as illustrated in FIG. 10, the beam detection member 32 is placed on the placement surface 311 so that the pins 312 are inserted into the through-holes 322. The beam detection member 32 is placed on the placement surface 311 in a state where the pins 312 are inserted into the through-holes 322. Thus, an arrangement aspect of the through-holes 322 is same as an arrangement aspect of the pins 312. Furthermore, the number of the through-holes 322 is equal to (alternatively, may be more than) the number of the pins 312. As a result, the beam detection member 32 is placed on the placement surface 311 to have the desired first positional relationship relative to the placement surface 311. The beam detection member 32 is placed on the placement surface 311 to have the desired first positional relationship relative to the pins 312 on the placement surface 311. The beam detection member 32 is placed on the placement surface 311 to satisfy the desired first positional relationship that the pins 312 on the placement surface 311 overlap with the through-holes 322 of the beam detection member 32 along the Z axis direction. The beam detection member 32 is placed on the placement surface 311 to satisfy the desired first positional relationship that a position in the X axis direction of a certain pin 312 is same as a position in the X axis direction of the through-hole 322 corresponding the certain pin 312 and a position in the Y axis direction of a certain pin 312 is same as a position in the Y axis direction of the through-hole 322 corresponding the certain pin 312.

The position at which the pin 312 is formed may be used as a fiducial position on the placement surface 311 in placing the beam detection member 32 on the placement surface 311. In this case, the beam detection member 32 is placed on the placement surface 311 in a state where it is aligned to have the desired first positional relationship relative to the fiducial position on the placement surface 311.

The beam detection member 32 is further provided with a light shield member 323. The light shield member 323 is a member that shields the processing light EL. The light shield member 323 is formed on an upper surface (namely, a surface that faces toward the +Z side) of the base member 321. An upper surface of the light shield member 323 is located above the upper surface of the base member 321. However, the upper surface of the light shield member 323 may be located below the upper surface of the base member 321 or may be located at the same height as the upper surface of the base member 321. At least a part of the light shield member 323 may be integrated with the base member 321. The light shield member 323 may be attachable to the base member 321 and may be detachable from the base member 321.

An aperture 324 that penetrates the light shield member 323 along the Z axis direction is formed at the light shield member 323. A shape of the aperture 324 in a plane along the XY plane is slit shape, however, may be any other shape such as a circular shape (a pin-hole shape), an oblong shape and a polygonal shape. The aperture 324 is a through-hole through which the processing light EL is allowed to pass.

The beam detection member 32 is further provided with a beam detector 325. The beam detector 325 is disposed at a position at which the processing light EL passing through the aperture 324 is optically receivable. And, the aperture 324 is disposed at a position that has a predetermined positional relationship relative to the through-holes 322. For example, when the beam detector is provided with single beam detector 325, typically, a photoelectric converter such as a photometric sensor by which the received processing light EL is photoelectrically convertible, a positional relationship between the aperture 324 and the processing light EL is calculatable from an output of the photoelectric converter. In this case, information relating to a positional relationship between the aperture 324 and the through-holes 322 is information that is already known to the control apparatus 7. Typically, the beam detector 325 is disposed below (namely, at the -Z side from) the light shield member 323.

Note that a diffuser plate that diffuses the processing light EL or the guide light GL may be disposed between the aperture 324 and the beam detector 325 and / or at an incident side of the aperture 324. Moreover, a cover glass for protecting the aperture 324 may be disposed at the incident side of the aperture 324.

The bead detection member 32 may be provided with single beam detector 325 as described above or may be provided with a plurality of beam detectors 325. When the bead detection member 32 is provided with the plurality of beam detectors 325, a plurality of apertures 324 that correspond to the plurality of beam detectors 325, respectively, may be formed at the light shield member 323. In this case, each beam detector 325 detects the processing light EL that enters each beam detector 325 through the aperture 324 corresponding to each beam detector 325.

A detected result by the beam detector 325 may include information relating to a state of the processing light EL that enters the beam detector 325. For example, the detected result by the beam detector 325 includes information relating to an intensity (specifically, an intensity in a plane that intersects with the XY plane) of the processing light EL that enters the beam detector 325. More specifically, the detected result by the beam detector 325 includes information relating to an intensity distribution in the plane along the XY plane of the processing light EL. The detected result by the beam detector 325 is outputted to the control apparatus 7.

Again in FIG. 4, after the beam detection member 32 is placed on the placement surface 311, the processing apparatus 2 irradiates the beam detection member 32 with the processing light EL (a step S112). Especially, the processing apparatus 2 irradiates the bead detector 325 disposed in the beam detection member 32 with the processing light EL. When the bead detection member 32 is provided with the plurality of beam detectors 325, the processing apparatus 2 irradiates the plurality of beam detectors 325 with the processing light EL in sequence. Specifically, the head driving system 22 moves the processing head 21 so that the beam detector 325 is irradiated with the processing light EL. In this case, the head driving system 22 may move the processing head 21 so that the processing light EL (more specifically, the irradiation area EA of the processing light EL) traverses the aperture 324 in the plane along the XY plane. The processing head 21 emits the processing light EL during a period when it moves by the head driving system 22. As a result, the aperture 324 is irradiated with the processing light EL at a certain timing in the period when the processing head 21 moves. Namely, the processing light EL is detected by the beam detector 325 at a certain timing in the period when the processing head 21 moves.

Then, the control apparatus 7 associates the processing coordinate system with the stage coordinate system on the basis of the detected result by the beam detector 325 at the step S112 (a step S113). Specifically, the detected result by the beam detector 32 indicates that the intensity of the processing light EL during a period when the aperture 324 is irradiated with at least a part of the processing light EL is higher than the intensity of the processing light EL during a period when the aperture 324 is not irradiated with the processing light EL. Thus, the control apparatus 7 determines a time when the aperture 324 is irradiated with the processing light EL (namely, a time when the beam detector 325 is irradiated with the processing light EL) on the basis of the detected result by the beam detector 325. Moreover, the control apparatus 7 determines the position of the processing head 21 at the time when the beam detector 325 is irradiated with the processing light EL on the basis of the time when the aperture 324 is irradiated with the processing light EL and a measured result by the position measurement apparatus 23. Note that the control apparatus 7 may be capable of determining the position of the processing head 21 that is in a state where it is allowed to irradiate the beam detector 325 with the processing light EL on the basis of the output of the beam detector 325 and the measured result by the position measurement apparatus 23. Namely, the control apparatus 7 determines, in the processing coordinate system, the position of the processing head 21 that is in a state where it is allowed to irradiate the beam detector 325 with the processing light EL. Note that the position of the processing head 21 herein may include a position of the processing head 21 itself and may include a position that is unique to the processing head 21. The additive processed position at which the processing head 21 performs the additive processing (namely, the light concentration position of the processing light EL) is one example of the position that is unique to the processing head 21. Furthermore, as described above, the information relating to the positional relationship between the aperture 324 and the through-holes 322 is the information that is already known to the control apparatus 7. Thus, the control apparatus 7 determines, in the processing coordinate system, the position of the processing head 21 that is in a state where it is allowed to irradiate the through-hole 322 with the processing light EL on the basis of information relating to the position of the processing head 21 that is in the state where it is allowed to irradiate the aperture 324 with the processing light EL and the information relating to the positional relationship between the aperture 324 and the through-holes 322. Furthermore, as described above, the through-holes 322 overlap with the pins 312 along the Z axis direction in a situation where the beam detection member 32 is placed on the placement surface 311. Thus, the position of the processing head 21 that is in the state where it is allowed to irradiate the through-hole 322 with the processing light EL may be regarded to be equivalent to the position of the processing head 21 that is in a state where it is allowed to irradiate the pin 312 with the processing light EL. Furthermore, as described above, the information relating to the positions of the pins 312 in the stage coordinate system is the information that is already known to the control apparatus 7. Thus, the control apparatus 7 determines that the position in the processing coordinate system of the processing head 21 that is in the state where it is allowed to irradiate the pin 312 with the processing light EL and the position in the stage coordinate system at which the pin 312 is formed are positions that should be associated with each other. Namely, the control apparatus 7 determines that a specific position in the processing coordinate system and a specific position in the stage coordinate system are positions that should be associated with each other. As a result, the control apparatus 7 associates the processing coordinate system with the stage coordinate system on the basis of such a determined result that the specific position in the processing coordinate system and the specific position in the stage coordinate system are positions that should be associated with each other. As a result, the control apparatus 7 determines, in the processing coordinate system, the position of the processing head 21 that is in a state where it is allowed to irradiate any position in the stage coordinate system with the processing light EL. Furthermore, the control apparatus 7 determines, in the stage coordinate system, a position (for example, the additive processed position) that is irradiated with the processing light EL by the processing head 21 that is disposed at any position in the processing coordinate system.

Next, in order to associate the measurement coordinate system with the stage coordinate system, firstly, a fiducial member 34 is placed on the placement surface 311 of the stage 31. Especially, the fiducial member 34 is placed on the placement surface 311 so that a positional relationship between the fiducial member 34 and the placement surface 311 is a desired second positional relationship. In the present embodiment, in order to place the fiducial member 34 on the placement surface 311 so that the positional relationship between the fiducial member 34 and the placement surface 311 is the desired second positional relationship, a mark for an alignment is formed on each of the fiducial member 34 and the placement surface 311. Specifically, the pin 312 formed on the placement surface 311 may be used as the mark even in the case where the fiducial member 34 is placed on the placement surface 311, as with the case where the beam detection member 32 is placed on the placement surface 311. Thus, in the below described description, the description about the placement surface 311 on which the mark for the alignment is formed is omitted and one example of the fiducial member 34 on which the mark for the alignment is formed will be described with reference to FIG. 11 to FIG. 12. FIG. 11 is a planer view that illustrates the fiducial member 34 on which the mark for the alignment is formed. FIG. 12 is a planer view that illustrates the fiducial member 34 placed on the placement surface 311. However, a mark that is different from the pin 312 formed on the placement surface 311 may be used as the mark for placing the fiducial member 34 on the placement surface 311.

As illustrated in FIG. 11, the fiducial member 34 is provided with a base member 341. The base member 341 is a plate-shaped member. The base member 341 has a shape and a size that allow it to be placed on the placement surface 311. A plurality of through-holes 342 are formed in the base member 341 as the marks for the alignment. Two through-holes 342 are formed in the base member 341 in an example illustrated in FIG. 11. The through-hole 342 penetrates the base member 341 along the Z axis direction.

In the present embodiment, as illustrated in FIG. 12, the fiducial member 34 is placed on the placement surface 311 so that the pins 312 are inserted into the through-holes 342. Thus, an arrangement aspect of the through-holes 342 is same as the arrangement aspect of the pins 312. Furthermore, the number of the through-holes 342 is equal to (alternatively, may be more than) the number of the pins 312. As a result, the fiducial member 34 is placed on the placement surface 311 to have the desired second positional relationship relative to the placement surface 311. The fiducial member 34 is placed on the placement surface 311 to have the desired second positional relationship relative to the pins 312 on the placement surface 311. The fiducial member 34 is placed on the placement surface 311 to satisfy the desired second positional relationship that the pins 312 on the placement surface 311 overlap with the through-holes 342 of the fiducial member 34 along the Z axis direction. The fiducial member 34 is placed on the placement surface 311 to satisfy the desired second positional relationship that a position in the X axis direction of a certain pin 312 is same as a position in the X axis direction of the through-hole 342 corresponding the certain pin 312 and a position in the Y axis direction of a certain pin 312 is same as a position in the Y axis direction of the through-hole 342 corresponding the certain pin 312.

The position at which the pin 312 is formed may be used as a fiducial position on the placement surface 311 in placing the fiducial member 34 on the placement surface 311. In this case, the fiducial member 34 is placed on the placement surface 311 in a state where it is aligned to have the desired second positional relationship relative to the fiducial position on the placement surface 311.

At least one fiducial mark 343 is formed on an upper surface of the base member 341. One fiducial mark 343 may be formed on the base member 341, two fiducial marks 343 may be formed on the base member 341, three fiducial marks 343 may be formed on the base member 341, four fiducial marks 343 may be formed on the base member 341, or five or more fiducial marks 343 may be formed on the base member 341. FIG. 11 illustrates an example in which five fiducial marks 343 are formed on the upper surface of the base member 341. The fiducial mark 343 is a mark that is measurable by the measurement apparatus 8. For example, the fiducial mark 343 is a mark that is imageable by the imaging apparatus 82 of the measurement apparatus 8. Information relating to a positional relationship between the fiducial marks 343 and the through-holes 342 is information that is already known to the control apparatus 7.

The fiducial mark 343 may be formed at a predetermined position on the base member 341 so that the fiducial mark 343 is disposed at a predetermined position on the placement surface 311 (for example, a center of the placement surface 311) in the case where the fiducial member 34 is placed on the placement surface 311 so that the pins 312 are inserted into the through-holes 342. In this case, information relating to the predetermined position on the placement surface 311 (namely, the predetermined position on the placement surface 311 in the stage coordinate system) on which the fiducial mark 343 is disposed may be information that is already known to the control apparatus 7. Moreover, in this case, the predetermined position on the placement surface 311 on which the fiducial mark 343 is to be disposed may be used as a fiducial position on the placement surface 311 in placing the fiducial member 34 on the placement surface 311. In this case, the fiducial member 34 is placed on the placement surface 311 in a state where it is aligned so that the fiducial mark 343 is disposed on the fiducial position on the placement surface 311. Incidentally, in this case, information relating to a positional relationship between the positions at which the fiducial marks 343 are disposed and the through-holes 342 may not be the information that is already known to the control apparatus 7.

Note that the beam detection member 32 illustrated in FIG. 7 to FIG. 9 and the fiducial member 34 illustrated in FIG. 11 and FIG. 12 may be provided on the same member.

Again in FIG. 4, after the fiducial member 34 is placed on the placement surface 311, the measurement apparatus 8 measures the fiducial member 34 (a step S114). Especially, the measurement apparatus 8 measures the fiducial marks 343 formed on the fiducial member 34.

Then, the control apparatus 7 associates the measurement coordinate system with the stage coordinate system on the basis of the measured result by the measurement apparatus 8 at the step S115 (a step S116). Specifically, the control apparatus 7 determines the position of the fiducial marks 343 in the measurement coordinate system on the basis of the measured result by the measurement apparatus 8. Furthermore, as described above, the information relating to the positional relationship between the fiducial marks 343 and the through-holes 342 is the information that is already known to the control apparatus 7. Thus, the control apparatus 7 determines the position of the through-holes 322 in the measurement coordinate system on the basis of the information relating to the position of the fiducial marks 343 in the measurement coordinate system and the information relating to the positional relationship between the fiducial marks 343 and the through-holes 342. Furthermore, as described above, the positions of the through-holes 342 are same as the positions of the pins 312 in a situation where the fiducial member 34 is placed on the placement surface 311. Thus, the position of the through-holes 342 in the measurement coordinate system may be regarded to be equivalent to the position of pins 312 in the measurement coordinate system. Furthermore, as described above, the information relating to the position of the pins 312 in the stage coordinate system is the information that is already known to the control apparatus 7. Thus, the control apparatus 7 determines that the position of the pin 312 in the measurement coordinate system and the position of the pin 312 in the stage coordinate system are positions that should be associated with each other. Namely, the control apparatus 7 determines that a specific position in the measurement coordinate system and a specific position in the stage coordinate system are positions that should be associated with each other. As a result, the control apparatus 7 associates the measurement coordinate system with the stage coordinate system on the basis of such a determined result that the specific position in the measurement coordinate system and the specific position in the stage coordinate system are positions that should be associated with each other. As a result, the control apparatus 7 determines the position of the measurement target object in the stage coordinate system.

Alternatively, as described above, when the fiducial mark 343 is formed on the base member 341 so that the fiducial mark 343 is disposed at the predetermined position on the placement surface 311 (for example, a center of the placement surface 311), the information relating to the predetermined position in the stage coordinate system on which the fiducial mark 343 is disposed is the information that is already known to the control apparatus 7. Thus, the control apparatus 7 determines that the information relating to the position of the fiducial marks 343 in the measurement coordinate system and the predetermined position in the stage coordinate system at which the fiducial mark 343 is disposed are positions that should be associated with each other. Namely, the control apparatus 7 determines that a specific position in the measurement coordinate system and a specific position in the stage coordinate system are positions that should be associated with each other. As a result, the control apparatus 7 associates the measurement coordinate system with the stage coordinate system on the basis of such a determined result that the specific position in the measurement coordinate system and the specific position in the stage coordinate system are positions that should be associated with each other.

Note that a positional misalignment between the processing light EL and the guide light GL may be measured by the beam detection member 32. When the plurality of guide lights GL are emitted, a positional misalignment between the position at which the plurality of guide lights GL intersect and the light concentration position of the processing light EL (the additive processed position) may be measured by the beam detection member 32. When there is the misalignment between the processing light EL and the guide light GL, the light concentration position of the processing light EL and / or a position of the guide light GL (an intersecting position of the plurality of guide lights when the plurality of guide lights GL are used) may be changed.

### (2-2) Workpiece Model Alignment Operation

Next, the workpiece model alignment operation will be described. The workpiece model alignment operation is an operation for aligning a workpiece model WM, which is a three-dimensional model of the workpiece W on which the three-dimensional structural object ST should be formed, with the actual workpiece W. Especially, the workpiece model alignment operation is an operation for aligning the workpiece model WM with the workpiece W in a fiducial coordinate system. The fiducial coordinate system is a coordinate system that is a fiducial of the processing system SYS. The fiducial coordinate system is a coordinate system that is used for the control by the control apparatus 7. In the present embodiment, it is assumed that the stage coordinate system is used as the fiducial coordinate system. In this case, the workpiece model alignment operation is an operation for aligning the workpiece model WM with the workpiece W in the stage coordinate system. However, the measurement coordinate system or the processing coordinate system may be used as the fiducial coordinate system. Another coordinate system that is different from the stage coordinate system, the measurement coordinate system and the processing coordinate system may be used as the fiducial coordinate system.

As a result of the alignment of the workpiece model WM and the workpiece W, workpiece information relating to the workpiece model WM that is aligned with the workpiece W is generated. The workpiece information includes both of workpiece position information relating to a position of the workpiece model WM and workpiece shape information relating to a shape of the workpiece model WM. The workpiece information is information in which the workpiece position information is associated with the workpiece shape information. The position of the workpiece model WM is same as (alternatively, is substantially almost same as, although is not quite same as) the position of the actual workpiece W. Thus, the workpiece position information may be regarded to be equivalent to information relating to the position of the workpiece W. The shape of the workpiece model WM is same as (alternatively, is substantially almost same as, although is not quite same as) the shape of the actual workpiece W. Thus, the workpiece shape information may be regarded to be equivalent to information relating to the shape of the actual workpiece W. Note that "the workpiece information in which the workpiece position information is associated with the workpiece shape information" means information from which both of the position and the shape of each part of the workpiece model WM is determinable, as with "the measurement state information in which the measurement position information is associated with the measurement shape information". Note that the workpiece information may not include the workpiece position information and the workpiece shape information as separate and independent different information, and the workpiece information may have any data structure as long as both of the position and the shape of each part of the workpiece model WM is determinable.

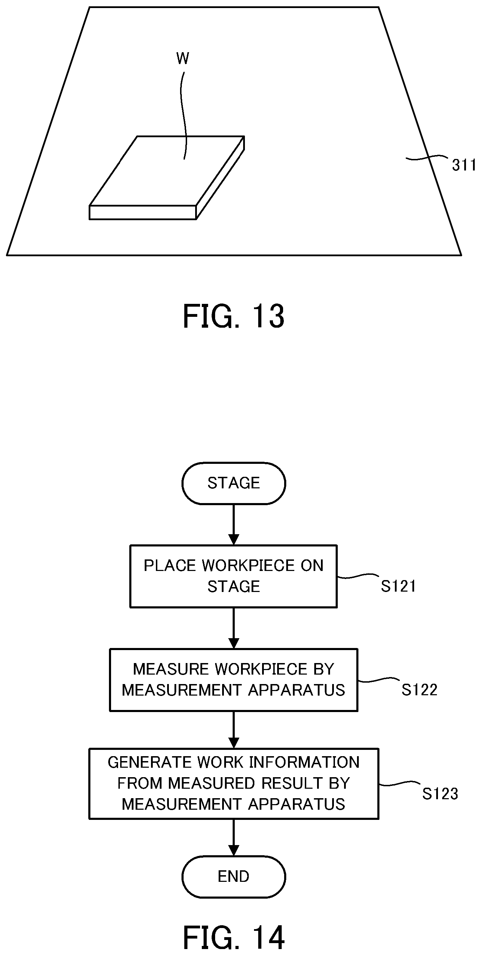

The control apparatus 7 determines the position and a direction (in other words, an attitude) of each part of the workpiece model WM (for example, each part of a surface of the workpiece model WM) in the stage coordinate system by referring to the workpiece information in which the workpiece position information is associated with the workpiece shape information, as illustrated in FIG. 13 that is a perspective view that illustrates the placement surface 311 and the workpiece W in the stage coordinate system. Namely, the control apparatus 7 determines the position and a direction (in other words, an attitude) of each part of the workpiece W (for example, each part of a surface of the workpiece W) in the stage coordinate system. As a result, the processing system SYS properly performs the additive processing on the workpiece W, the position and the direction of which are known by the workpiece information, in the below described processing operation on the basis of the workpiece information.

In the present embodiment, the processing system SYS performs, as the workpiece model alignment operation, at least one of a first workpiece model alignment operation, a second workpiece model alignment operation and a third workpiece model alignment operation. Thus, in the below described description, the first to third workpiece model alignment operations will be described in sequence.

Incidentally, when the workpiece information is information that is already known to the control apparatus 7, the processing system SYS may not perform the workpiece model alignment operation. For example, when the workpiece information is inputted to the processing system SYS through the input apparatus 92, the processing system SYS may not perform the workpiece model alignment operation.

### (2-2-1) First Workpiece Model Alignment Operation

Firstly, with reference to FIG. 14, the first workpiece model alignment operation will be described. FIG. 14 is a flowchart that illustrates a flow of the first workpiece model alignment operation.

As illustrated in FIG. 14, firstly, the workpiece W is placed on the placement surface 311 of the stage 31 (a step S121). Then, the measurement apparatus 7 measures the workpiece W (a step S122).

Then, the control apparatus 7 generates the workpiece information on the basis of the measured result by the measurement apparatus 8 at the step S122 (a step S123). Specifically, as described above, the control apparatus 7 generates the measurement information relating to the workpiece W that is measured by the measurement apparatus8 on the basis of the measured result by the measurement apparatus 8 (namely, the imaged result by the imaging apparatuses 82). The measurement information includes the measurement shape information relating to the shape of the workpiece W. This measurement shape information is used as the workpiece shape information as it is. Furthermore, the measurement information includes the measurement position information relating to the position of the workpiece W. However, the measurement position information is the information relating to the position of the workpiece W in the measurement coordinate system. Thus, the control apparatus 7 converts the position of the workpiece W in the measurement coordinate system that is indicated by the measurement position information into the position of the workpiece W in the stage coordinate system. Information relating to the position of the workpiece W in the stage coordinate system that is obtained by the conversion is used as the workpiece position information. As a result, the control apparatus 7 generates the workpiece information in which the workpiece position information is associated with the workpiece shape information. Namely, the control apparatus 7 generates the workpiece information relating to the workpiece model WM that corresponds to the actual workpiece W.

### (2-2-2) Second Workpiece Model Alignment Operation

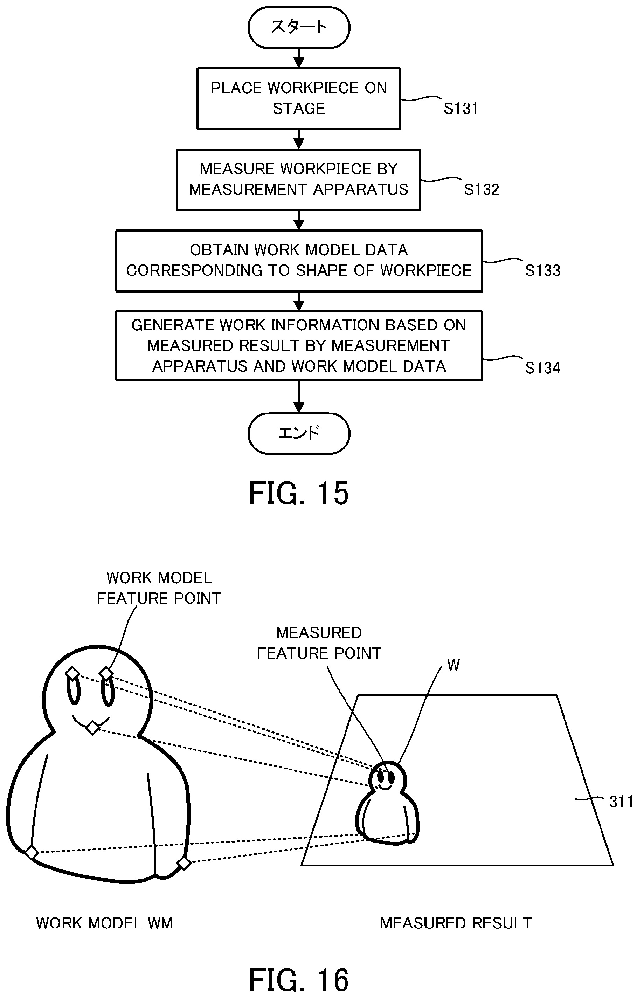

Next, with reference to FIG. 15, the second workpiece model alignment operation will be described. FIG. 15 is a flowchart that illustrates a flow of the second workpiece model alignment operation.

As illustrated in FIG. 15, firstly, the workpiece W is placed on the placement surface 311 of the stage 31 (a step S131). Then, the measurement apparatus 7 measures the state of the workpiece W (a step S132).

After, before or in parallel with the processes from the step S131 to the step S132, the control apparatus 7 obtains a workpiece model data corresponding to the shape of the workpiece W placed on the placement surface 311 (a step S133). Specifically, the control apparatus 7 obtains the workpiece model data that represents the workpiece model WM the shape of which is same as or similar to the shape of the workpiece W. The workpiece model data includes workpiece model characteristic information relating to a characteristic of the workpiece model WM. Especially, the workpiece model data includes workpiece model shape information relating to the shape of the workpiece model WM that is one example of the characteristic of the workpiece model WM.

The workpiece model data may be recorded in the memory (namely, the recording medium) of the control apparatus 7. The workpiece model data may be recorded in any recording medium (for example, a hard disk or a semiconductor memory) that is built-in the control apparatus 7 or that is attachable to the control apparatus 7. In this case, the control apparatus 7 may obtain the workpiece model data by reading the workpiece model data from the recording medium by using the input apparatus 92 as needed. The workpiece model data may be recorded in an external apparatus outside the control apparatus 7. The workpiece model data may be recorded in an external apparatus outside the processing system SYS. In this case, the control apparatus 7 may obtain the workpiece model data by downloading the workpiece model data from the external apparatus by using the input apparatus 92 as needed.

A plurality of workpiece model data that represent a plurality of workpiece models WM having a plurality of different shapes, respectively, may be recorded in the recording medium (alternatively, the external apparatus). In this case, the control apparatus 7 may obtain one workpiece model data corresponding to the shape of the workpiece W from the plurality of workpiece model data. As a result, even when the shape of the workpiece W placed on the placement surface 311 changes, the control apparatus 7 properly obtains one workpiece model data corresponding to the shape of the workpiece W. Alternatively, when the shape of the workpiece W placed on the placement surface 311 is always the same, single workpiece model data may be recorded in the recording medium (alternatively, the external apparatus).

The control apparatus 7 may obtain the workpiece model data on the basis of an instruction of the user of the processing system SYS. Specifically, the control apparatus 7 may control the display 91 to display the plurality of workpiece models WM. Furthermore, the control apparatus 7 may control the display 91 to display a GUI that allows the user to select either one of the plurality of workpiece models WM as the workpiece model WM the shape of which is same as or similar to the shape of the workpiece W. The user may recognize the shape of the workpiece W by watching the workpiece W and select the workpiece model WM the shape of which is same as or similar to the recognized shape of the workpiece W by using the input apparatus 92. As a result, the control apparatus 7 obtains the workpiece model data that represents the workpiece model WM selected by the user. Alternatively, when the shape of the workpiece W placed on the placement surface 311 is determined in advance, the control apparatus 7 may obtain the workpiece model data that represents the workpiece model WM the shape of which is same as or similar to the shape of the workpiece W that is determined in advance.

The control apparatus 7 may modify the workpiece model WM represented by the obtained workpiece model data on the basis of the instruction of the user. For example, the control apparatus 7 may modify the characteristic (for example, at least one of the shape and the size) of the workpiece model WM on the basis of the instruction of the user. When the workpiece model WM is modified, the workpiece model data relating to the modified workpiece model WM is used in the subsequent process.

Then, the control apparatus 7 generates the workpiece information on the basis of the measured result by the measurement apparatus 8 at the step S132 and the workpiece model data obtained at the step S133 (a step S134).

Specifically, the control apparatus 7 obtains the workpiece model shape information relating to the shape of the workpiece model WM from the workpiece model data. Since the shape of the workpiece model WM is same as or similar to the shape of the workpiece W, the workpiece model shape information may be regarded to be equivalent to the information relating to the shape of the workpiece W. On the other hand, the measurement state information generated on the basis of the measured result by the measurement apparatus 8 also includes the measurement shape information relating to the shape of the workpiece W. However, there is a possibility that an accuracy of the shape of the workpiece W represented by the measurement shape information is lower than an accuracy of the shape of the workpiece model WM represented by the workpiece model shape information, due to a measurement error and the like of the measurement apparatus 8. Thus, in the present embodiment, the control apparatus 7 uses, as the workpiece shape information, the workpiece model shape information obtained from the workpiece model data instead of the measurement shape information included in the measurement state information.

However, the workpiece model shape information is information different from the measurement information generated on the basis of the measured result by the measurement apparatus 8. Thus, the information relating to the position of the workpiece W on the placement surface 311 is not associated with the workpiece model shape information. Namely, the control apparatus 7 cannot determine which position on the placement surface 311 the workpiece model WM (namely, the workpiece W) is disposed at only by referring to the workpiece model shape information. Moreover, the control apparatus 7 cannot determine what attitude the workpiece model WM (namely, the workpiece W) placed on the placement surface 311 has only by referring to the workpiece model shape information. Moreover, the control apparatus 7 cannot determine what size the workpiece model WM (namely, the workpiece W) placed on the placement surface 311 has only by referring to the workpiece model shape information. Thus, the control apparatus 7 associates the workpiece mode shape information with the measurement position information relating to the position of the workpiece W included in the measurement state information. Specifically, the control apparatus 7 generates the workpiece information from which not only the shape of the workpiece model WM but also the position of the workpiece model WM on the placement surface 311 are determinable by associating the workpiece model shape information and the measurement position information. The position of the workpiece model WM on the placement surface 311 may be usable as the position of the workpiece W on the placement surface 311, respectively. Thus, the control apparatus 7 generates the workpiece information from which the position of the workpiece W on the placement surface 311 is determinable (furthermore, the shape is also determinable, of course). In this case, the control apparatus 7 serves as a calculation apparatus that associates the workpiece model shape information and the measurement position information.

Specifically, the control apparatus 7 generates the measurement information that includes the measurement shape information and the measurement position information in a state where they are associated with each other on the basis of the measured result by the measurement apparatus 8. Then, the control apparatus 7 performs an alignment process for disposing the workpiece model WM at the position of the workpiece W represented by the measurement position information. Namely, the control apparatus 7 performs the alignment process for allowing the workpiece model WM to be closer to the workpiece W represented by the measurement shape information by translating, scaling and / or rotating it. As a result, the position of the workpiece model WM on the placement surface 311 (namely, the position of the workpiece W on the placement surface 311) is determined. Thus, the control apparatus 7 generates the workpiece information on the basis of a result of the alignment process.

The control apparatus 7 may perform a pattern matching process as a part of the alignment process. Next, one specific example of alignment process including the pattern matching process will be described. The control apparatus 7 extracts workpiece model feature points that are a plurality of feature points of the workpiece model WM on the basis of the workpiece model WM. The control apparatus 7 extracts a plurality of (for example, three or more) workpiece model feature points. The control apparatus 7 may extract the workpiece model feature points on the basis of an operation of designating the workpiece model feature points that is performed by the user using the input apparatus 92. The control apparatus 7 may extract the workpiece model feature points in accordance with a predetermined criterion without needing the operation of the user. Moreover, the control apparatus 7 may extracts a measurement feature point that is a feature point of the workpiece W (specifically, a feature point of the workpiece W that is determinable from the measurement state information) and that corresponds to the workpiece model feature point on the basis of the measurement state information. The control apparatus 7 extracts a plurality of (for example, three or more) measurement feature points. The control apparatus 7 may extract the measurement feature points on the basis of an operation of designating the measurement feature points that is performed by the user using the input apparatus 92. The control apparatus 7 may extract the measurement feature points in accordance with a predetermined criterion without requiring the operation of the user. Then, the control apparatus 7 performs a pattern matching between the workpiece model WM and the workpiece W represented by the measurement state information on the basis of the workpiece model feature points and the measurement feature points. Specifically, as illustrated in FIG. 16 that is a conceptual diagram that conceptually illustrates an aspect pattern matching between the workpiece model WM and the workpiece W represented by the measurement state information, the control apparatus 7 translates, scales and / or rotates the workpiece model WM so that the workpiece model feature points are closer to the measurement feature points. The control apparatus 7 translates, scales and / or rotates the workpiece model WM until a difference between the workpiece model feature points and the measurement feature points is equal to or smaller than a predetermined amount (typically, is minimum). As a result, the workpiece model WM is disposed at a position that is same as a position at which the workpiece W represented by the measurement state information is disposed in the measurement coordinate system. Thus, as a result of the alignment process, the control apparatus 7 determines the position of the workpiece model WM in the measurement coordinate system. However, when the workpiece information is generated, the position of the workpiece model WM in the measurement coordinate system is converted into the position of the workpiece model WM in the stage coordinate system, as described above. As a result, the information relating to the position of the workpiece model WM that is usable as the workpiece position information is obtained. Namely, the workpiece information in which the workpiece model shape information that is usable as the workpiece shape information is associated with the information relating to the position of the workpiece model WM that is usable as the workpiece position information is obtained as the information relating to the workpiece model WM.

The control apparatus 7 may perform the alignment process by using any algorithm for performing the alignment process. An ICP (Interative Closest Point) algorithm for performing an alignment of a plurality of point cloud (for example, a point cloud including the above described workpiece model feature point and a point cloud including the above described measurement feature point) is one example of this algorithm.

According to the above described second workpiece model alignment operation, there is a possibility that the shape of the workpiece model WM (namely, the shape of the workpiece W) represented by the workpiece information is more accurate, compared to the first workpiece model alignment operation. The reason for this is that there is a possibility that the accuracy of the shape of the workpiece W represented by the measurement shape information is lower than the accuracy of the shape of the workpiece model WM represented by the workpiece model shape information, as described above. Thus, there is a possibility that the processing system SYS forms the three-dimensional structural object ST more accurately by the below described processing operation by using the workpiece information generated by the second workpiece model alignment operation.

Note that the control apparatus 7 generates, at the step S134 in FIG. 15, the workpiece information on the basis of the measured result (especially, the measurement position information) by the measurement apparatus 8 of the processing system SYS and the workpiece model data (especially, the workpiece model shape information) obtained at the step S133 in the above described description. Namely, the control apparatus 7 associates the measurement position information that is generated from the measured result by the measurement apparatus 8 of the processing system SYS with the workpiece model shape information. However, the control apparatus 7 may obtain the measurement position information from the outside of the processing system SYS through the input apparatus 92 and generate the workpiece information on the basis of the obtained measurement position information and the workpiece model shape information. Namely, the control apparatus 7 may associate the measurement position information that is obtained from the outside of the processing system SYS through the input apparatus 92 with the workpiece model shape information.

In the above described description, the control apparatus 7 of the processing system SYS associates the measurement position information with the workpiece model shape information at the step S134 in FIG. 15. However, an external apparatus outside the processing system SYS may associate the measurement position information with the workpiece model shape information. In this case, the control apparatus 7 may transmit (namely, output) the measurement position information and the model shape information to the external apparatus outside the processing system SYS through a network.

### (2-2-3) Third Workpiece Model Alignment Operation

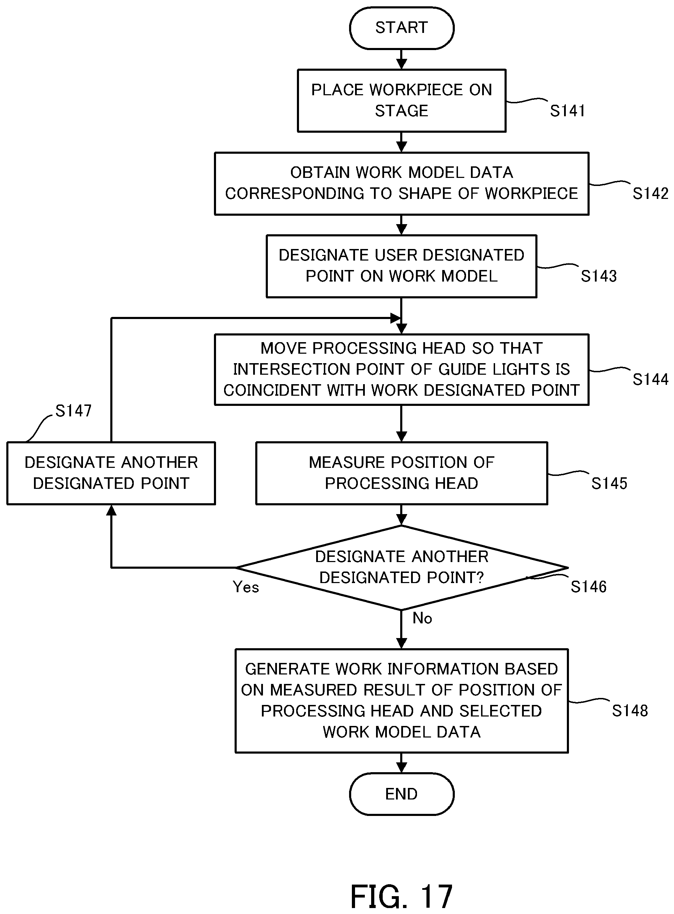

Next, with reference to FIG. 17, the third workpiece model alignment operation will be described. FIG. 17 is a flowchart that illustrates a flow of the third workpiece model alignment operation.

As illustrated in FIG. 17, firstly, the workpiece W is placed on the placement surface 311 of the stage 31 (a step S141). Then, the measurement apparatus 7 measures the state of the workpiece W (a step S142).

Then, the control apparatus 7 obtains the workpiece model data corresponding to the shape of the workpiece W placed on the placement surface 311 (a step S142). Note that the process at the step S142 may be same as the process at the step S133 in the above described second workpiece model alignment operation, and thus a detailed description thereof is omitted.

Then, a point on the surface of the workpiece model WM is designated as a user designated point by the user (a step S143). Specifically, the user designates the user designated point by using the input apparatus 92. Thus, the input apparatus 92 may be referred to as a designating apparatus that designates the user designated point. In this case, the control apparatus 7 may control the display 91 to display the workpiece model WM represented by the workpiece model data obtained at the step S142 and the user may designate the user designated point on the workpiece model WM displayed on the display 91. The user designated point may be a feature point on the surface of the workpiece model WM. At least one of a vertex, a corner, a point located at the most +Z side, a point located at the most -Z side, a point located at the most +X side, a point located at the most -X side, a point located at the most +Y side and a point located at the most -Y side is one example of the feature point on the surface of the workpiece model WM. However, the user designated point may be any point as long as it is a point on the surface of the workpiece model WM.

Then, the head driving system 22 moves the processing head 21 to satisfy a position condition that a point (it is referred to as a "workpiece designated point" in the below described description) on the workpiece W corresponding to the user designated point designated at the step S143 and the processing apparatus 2 have a desired third positional relationship (a step S144). The workpiece designated point is typically a point that is same as the user designated point. For example, when the vertex of the workpiece model WM is designated as the user designated point, the vertex of the workpiece W is the workpiece designated point. In this case, information relating to the third positional relationship is information that is already known to the control apparatus 7.

A state where the processing apparatus 2 is allowed to process the workpiece designated point is one example of a state where the workpiece designated point and the processing apparatus 2 have the desired third positional relationship. Since the processing apparatus 2 mainly processes the object at the additive processed position (namely, the light concentration position of the processing light EL), a state where the additive processed position is designated as the workpiece designated point is one example of a state where the workpiece designated point and the processing apparatus 2 have the desired third positional relationship. As described above, the plurality of guide lights GL emitted from the plurality of guide light emitting apparatuses 24, respectively, intersect at the additive processed position. Thus, a state where the plurality of guide lights GL intersect at the workpiece designated point is one example of a state where the workpiece designated point and the processing apparatus 2 have the desired third positional relationship. Namely, a state where the workpiece designated point is irradiated with the plurality of guide lights GL is one example of a state where the workpiece designated point and the processing apparatus 2 have the desired third positional relationship.

When a condition that the plurality of guide lights GL intersect at the workpiece designated point is used as the position condition, the plurality of guide light emitting apparatuses 24 emits the plurality of guide lights GL, respectively, and the head driving system 22 moves the processing head 21 so that the plurality of guide lights GL intersect at the workpiece designated point (the step S144). Namely, the head driving system 22 changes a relative positional relationship between the workpiece W and the additive processed position by moving the processing head 21 so that the plurality of guide lights GL intersect at the workpiece designated point.

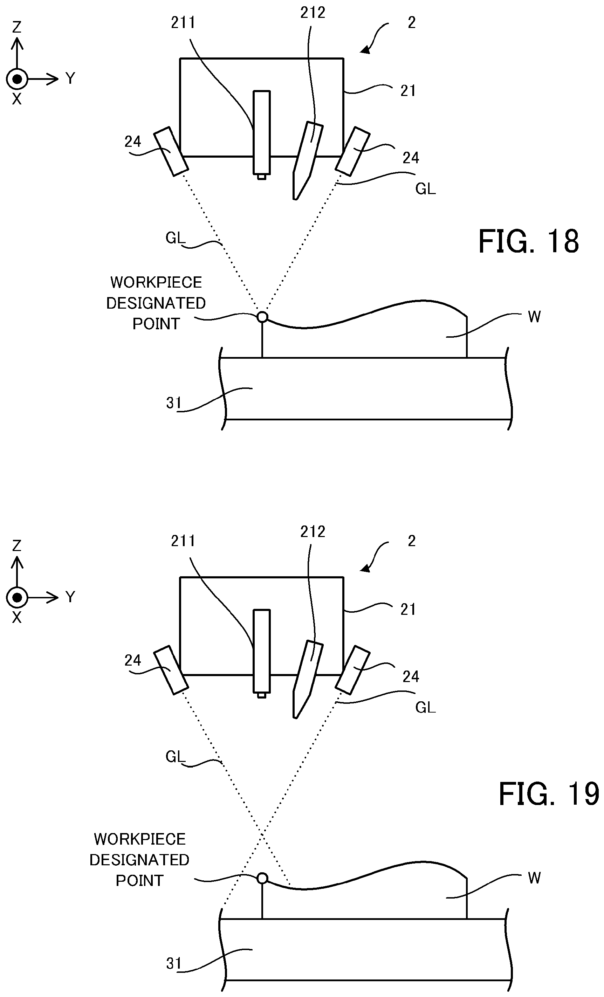

FIG. 18 is a cross-sectional view that illustrates an aspect in which the plurality of guide lights GL intersect at the workpiece designated point. On the other hand, FIG. 19 is a cross-sectional view that illustrates an aspect in which the plurality of guide lights GL do not intersect at the workpiece designated point. The head driving system 22 moves the processing head 21 so that a state of the plurality of guide lights GL changes from a state illustrated in FIG. 19 to a state illustrated in FIG. 18 (namely, the point at which the plurality of guide lights GL intersect is closer to the workpiece designated point).

In this case, the guide light GL may serve as a guide light for performing an alignment of the workpiece designated point and the processing apparatus 2 so that the workpiece designated point and the processing apparatus 2 have the desired third positional relationship. Since the workpiece designated point is designate on the surface of the workpiece W, the guide light GL may serve as a guide light for performing an alignment of the workpiece W and the processing apparatus 2 so that the workpiece designated point and the processing apparatus 2 have the desired third positional relationship.

The control apparatus 7 may control the head driving system 22 so that the processing head 21 moves on the basis of the instruction of the user for moving the processing head 21. Namely, the user may visually confirm whether or not the plurality of guide lights GL intersect at the workpiece designated point and the head driving system 22 may move the processing head 21 on the basis of a confirmed result by the user. In this case, the instruction of the user may be inputted through the input apparatus 92.

When the processing head 21 moves, the control apparatus 7 may control the imaging apparatus 82 to image the state of the guide lights GL on the workpiece W and may control the display 91 to display the imaged result by the imaging apparatus 82. Alternatively, when the processing system SYS is provided with an imaging apparatus that is different from the imaging apparatus 82, he control apparatus 7 may control another imaging apparatus to image the state of the guide lights GL on the workpiece W and may control the display 91 to display the imaged result by another imaging apparatus. In this case, the user may input the instruction for moving the processing head 21 by using the input apparatus 92 while referring to the displayed content of the display 91. Alternatively, the control apparatus 7 may control the head driving system 22 so that the processing head 21 moves on the basis of the imaged result by the imaging apparatus 82 (alternatively, the imaged result by another imaging apparatus, the same applies to the below described description). Note that a wavelength of the guide light GL may be different from a wavelength of the processing light EL. When the wavelength of the guide light GL is different from the wavelength of the processing light EL, a filter that reflects the processing light EL and through which the guide light GL is allowed to pass may be disposed at the most workpiece W side of an optical system of the imaging apparatus 82 or another imaging apparatus. For example, when the processing light is in a wavelength band of an infrared light, an infrared reflection filter may be used as the filter.

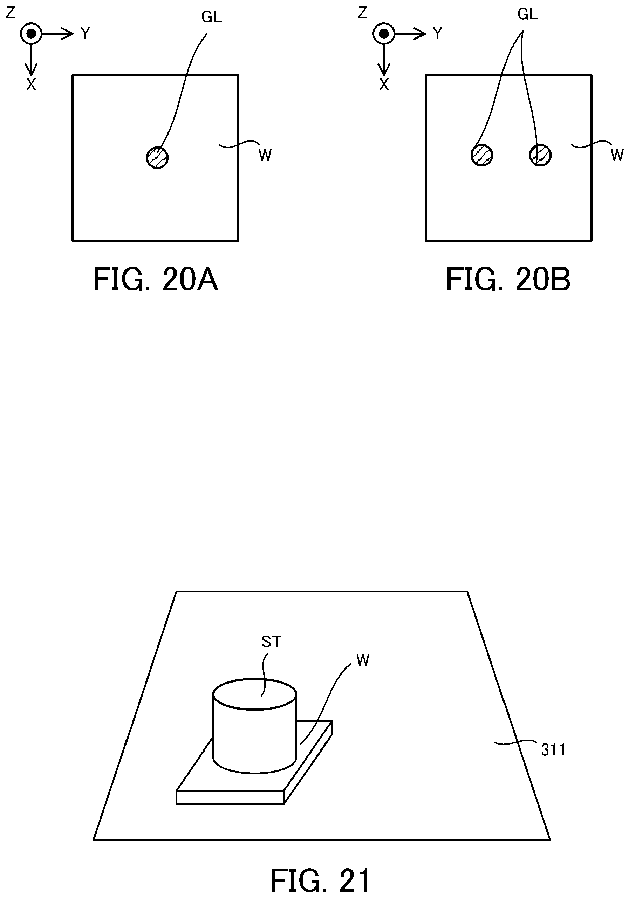

Specifically, when the plurality of guide lights GL intersect at the workpiece designated point, the imaged result by the imaging apparatus 82 indicates that beam spots of the plurality of guide lights GL overlap on the surface of the workpiece W (especially, the workpiece designated point), as illustrated in FIG. 20A. Namely, the imaged result by the imaging apparatus 82 indicates that single beam spot is generated on the surface of the workpiece W (especially, the workpiece designated point), as illustrated in FIG. 20A. On the other hand, when the plurality of guide lights GL do not intersect at the workpiece designated point, the imaged result by the imaging apparatus 82 indicates that beam spots of the plurality of guide lights GL do not overlap on the surface of the workpiece W (especially, the workpiece designated point), as illustrated in FIG. 20B. Namely, the imaged result by the imaging apparatus 82 indicates that a plurality of beam spots are generated on the surface of the workpiece W (especially, the workpiece designated point), as illustrated in FIG. 20B. Therefore, the control apparatus 7 determines on the basis of the imaged result by the imaging apparatus 82 whether or not the plurality of guide lights GL intersect at the workpiece designated point. When the plurality of guide lights GL do not intersect at the workpiece designated point, the user or the control apparatus 7 moves the processing head 21 so that the state of the plurality of guide lights GL on the surface of the workpiece W changes from a state illustrated in FIG. 20B to a state illustrated in FIG. 20A (namely, the plurality of beam spots are closer to each other).

Then, after the processing head 21 moves to satisfy the position condition that the workpiece designated point and the processing apparatus 2 have the desired third positional relationship, the position measurement apparatus 23 measures the position of the processing head 21 at a timing when the position condition is satisfied (a step S145). In the above described example, the position measurement apparatus 23 measures the position of the processing head 21 when the plurality of guide lights GL intersect at the workpiece designated point (the step S145). As described above, the plurality of guide lights GL intersect at the additive processed position. Thus, it can be said that the position measurement apparatus 23 measures the position of the processing head 21 in a state where the additive processed position is set on the workpiece designated point at the step S145. Namely, it can be said that the position measurement apparatus 23 measures the position of the processing head 21 in a state where it is allowed to process the workpiece designated point at the step S145. Moreover, since the additive processed position has a fixed positional relationship relative to the processing head 21, an operation of measuring the position of the processing head 21 may be regarded to be equivalent to an operation of indirectly measuring the additive processed position. Moreover, since the position of the processing head 21 is measured in a state where the additive processed position is set on the workpiece designated point, the operation of measuring the position of the processing head 21 (namely, the operation of indirectly measuring the additive processed position) may be regarded to be equivalent to an operation of indirectly measuring a position of the workpiece designated point on the workpiece W.

Then, the control apparatus 7 determines whether or not new user designated point should be designated (a step S146). Specifically, the control apparatus 7 may determine whether or not a desired number of user designated point is designated and the processes of the above described steps S144 and S145 are performed by using each of the desired number of user designated point. The desired number may be one, may be two, may be three, may be four, may be five or more. When it is determined that the desired number of the user designated point is not designated (as a result, the processes of the above described steps S144 and S145 are not performed by using each of the desired number of user designated point), the control apparatus 7 may determine that new user designated point should be designated. On the other hand, when it is determined that the desired number of the user designated point is designated and the processes of the above described steps S144 and S145 are performed by using each of the desired number of user designated point, the control apparatus 7 may determine that new user designated point may not be designated. Incidentally, when the number of the user designated point is one, the position in the X axis direction, the position in the Y axis direction and the position in the Z axis direction of the workpiece W are calculatable. When the shape of the workpiece is already known and the number of the user designated point is two, a rotation θZ around the Z axis is calculatable in addition to the XYZ position. When the shape of the workpiece is already known and the number of the user designated point is three or more, θX, θY and θZ and the XYZ position are calculatable.

And now, as a result of the determination at the step S146, when it is determined that new user designated point should be designated (a step S147: Yes), a point on the surface of the workpiece model WM (however, a point that is not yet designated as the user designated point) is designated as new user designated point by the user (a step S147). Then, the processes of the above described steps S144 and S145 are performed by using new user designated point.

On the other hand, as a result of the determination at the step S146, when it is determined that new user designated point may not be designated (a step S147: No), the control apparatus 7 generates the workpiece information on the basis of the measured result by the position measurement apparatus 23 at the step S145 and the workpiece model data obtained at the step S142 (a step S148).

Specifically, as described above, the measured result by the position measurement apparatus 23 at the step S145 indicates the position of the processing head 21 when the workpiece designated point and the processing apparatus 2 have the desired third positional relationship. Thus, the control apparatus 7 determines the position of the workpiece designated point in the processing coordinate system from the measured result by the position measurement apparatus 23. This is because the workpiece designated point and the processing apparatus 2 have the desired third positional relationship and thus the workpiece designated point and the processing head 21 must have a certain positional relationship that is determinable from the information relating to the third positional relationship that is the information already know to the control apparatus 7.

Then, the control apparatus 7 performs an alignment process for disposing the user designated point of the workpiece model WM at the position of the workpiece designated point that is determined from the measured result by the position measurement apparatus 23. Namely, the control apparatus 7 performs the alignment process for allowing the user designated point to be closer to the position of the workpiece designated point by translating, scaling and / or rotating the workpiece model WM represented by the workpiece model shape information. As a result, the position of the workpiece model WM on the placement surface 311 is determined. Thus, the control apparatus 7 generates the workpiece information on the basis of a result of the alignment process. Note that the control apparatus 7 may perform, as the alignment process, a process that is same as the alignment process used in the above described second workpiece model alignment operation. For example, the control apparatus 7 may perform the alignment process by using the ICP (Interative Closest Point) algorithm for performing the alignment of the plurality of point cloud (for example, a point cloud including model designated point and a point cloud including the user designated point). Thus, the detail of the alignment process in the third workpiece model alignment operation is omitted.

According to the above described third workpiece model alignment operation, the control apparatus 7 generates the workpiece information without requiring the measurement of the workpiece W by the measurement apparatus 8. Thus, even when the workpiece W has a shape that is not measurable easily or that is not measurable by the measurement apparatus 8, the control apparatus 7 generates the workpiece information.

### (2-3) Processing Model Alignment Operation

Next, the processing model alignment operation will be described. The processing model alignment operation is an operation for aligning a processing model PM, which is a three-dimensional model of the three-dimensional structural object ST that should be formed by the additive processing, with the workpiece model WM represented by the workpiece information that is generated by the workpiece model alignment operation. Especially, the processing model alignment operation is an operation for aligning the processing model PM with the workpiece model WM in the fiducial coordinate system. As described above, in the present embodiment, the stage coordinate system is used as the fiducial coordinate system. Thus, the processing model alignment operation is an operation for aligning the processing model PM with the workpiece model WM in the stage coordinate system.

As a result of the alignment of the processing model PM and the workpiece model WM, processing information relating to the processing model PM that is aligned with the workpiece model WM is generated. The processing model information is information in which processing position information relating to a position of the processing model PM is associated with processing shape information relating to a shape of the processing model PM. Note that "the processing model information in which the processing position information is associated with the processing shape information" means information from which both of the position and the shape of each part of the processing model PM is determinable. Note that the processing information may not include the processing position information and the processing shape information as separate and independent different information, and the processing information may have any data structure as long as both of the position and the shape of each part of the processing model PM is determinable.

The control apparatus 7 determines a positional relationship between the workpiece W and the three-dimensional structural object ST that should be formed on the workpiece W in the stage coordinate system by referring to the processing information, as illustrated in FIG. 21 that is a perspective view that illustrates the workpiece W and the three-dimensional structural object ST in the stage coordinate system. Namely, the control apparatus 7 determines, in the stage coordinate system, which position on the workpiece W the three-dimensional structural object ST should be formed at. The control apparatus 7 determines, in the stage coordinate system, what attitude on the workpiece W the three-dimensional structural object ST should be formed in. The control apparatus 7 determines, in the stage coordinate system, what size of the three-dimensional structural object ST should be formed on the workpiece W. As a result, the processing system SYS forms the three-dimensional structural object ST on a proper position on the workpiece W in the below described processing operation on the basis of the processing information. Namely, the processing system SYS forms the three-dimensional structural object ST having a proper shape based on the processing information on the proper position on the workpiece W based on the processing information.

Incidentally, when the processing information is information that is already known to the control apparatus 7, the processing system SYS may not perform the processing model alignment operation. For example, when the processing information is inputted to the processing system SYS through the input apparatus 92, the processing system SYS may not perform the processing model alignment operation.

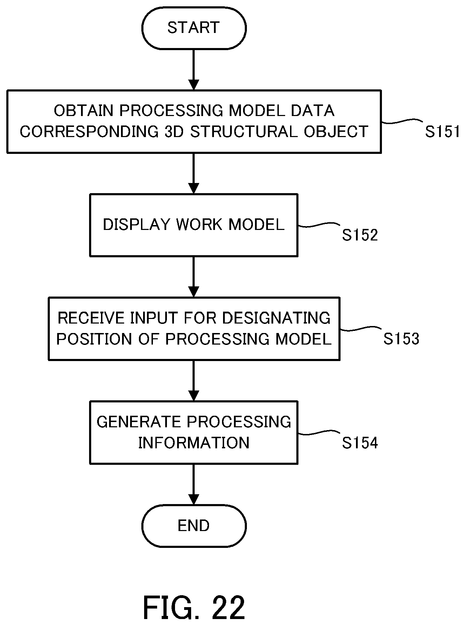

Next, with reference to FIG. 22, the processing model alignment operation will be described. FIG. 22 is a flowchart that illustrates a flow of the processing model alignment operation.

As illustrated in FIG. 22, the control apparatus 7 obtains a processing model data corresponding to the shape of the three-dimensional structural object ST that should be formed by the additive processing (a step S151). Specifically, the control apparatus 7 obtains the processing model data that represents the processing model PM the shape of which is same as or similar to the shape of the three-dimensional structural object ST. The processing model data includes processing model characteristic information relating to a characteristic of the processing model PM. Especially, the processing model data includes processing model shape information relating to the shape of the processing model PM that is one example of the characteristic of the processing model PM.

The processing model data may be recorded in the memory (namely, the recording medium) of the control apparatus 7. The processing model data may be recorded in any recording medium (for example, a hard disk or a semiconductor memory) that is built-in the control apparatus 7 or that is attachable to the control apparatus 7. In this case, the control apparatus 7 may obtain the processing model data by reading the processing model data from the recording medium by using the input apparatus 92 as needed. The processing model data may be recorded in an external apparatus outside the control apparatus 7. The processing model data may be recorded in an external apparatus outside the processing system SYS. In this case, the control apparatus 7 may obtain the processing model data by downloading the processing model data from the external apparatus by using the input apparatus 92 as needed.

A plurality of processing model data that represent a plurality of processing models PM having a plurality of different shapes, respectively, may be recorded in the recording medium (alternatively, the external apparatus). In this case, the control apparatus 7 may obtain one processing model data corresponding to the shape of the three-dimensional structural object ST from the plurality of processing model data. As a result, even when the shape of the three-dimensional structural object ST placed on the placement surface 311 changes, the control apparatus 7 properly obtains one processing model data corresponding to the shape of the three-dimensional structural object ST. Alternatively, when the shape of the three-dimensional structural object ST placed on the placement surface 311 is always the same, single processing model data may be recorded in the recording medium (alternatively, the external apparatus).

The control apparatus 7 may obtain the processing model data on the basis of an instruction of the user of the processing system SYS. Specifically, the control apparatus 7 may control the display 91 to display the plurality of processing models PM. Furthermore, the control apparatus 7 may control the display 91 to display a GUI that allows the user to select either one of the plurality of processing models PM as the processing model PM the shape of which is same as or similar to the shape of the three-dimensional structural object ST. The user may select the workpiece model WM the shape of which is same as or similar to the shape of the three-dimensional structural object ST that should be formed by the additive processing by using the input apparatus 92. As a result, the control apparatus 7 obtains the processing model data that represents the processing model PM selected by the user. Alternatively, when the shape of the three-dimensional structural object ST that should be formed by the additive processing is determined in advance, the control apparatus 7 may obtain the processing model data that represents the processing model PM the shape of which is same as or similar to the shape of the three-dimensional structural object ST that is determined in advance.

The control apparatus 7 may modify the processing model PM represented by the obtained processing model data on the basis of the instruction of the user. For example, the control apparatus 7 may modify the characteristic (for example, at least one of the shape and the size) of the processing model PM on the basis of the user. When the processing model PM is modified, the processing model data relating to the modified processing model PM is used in the subsequent process.

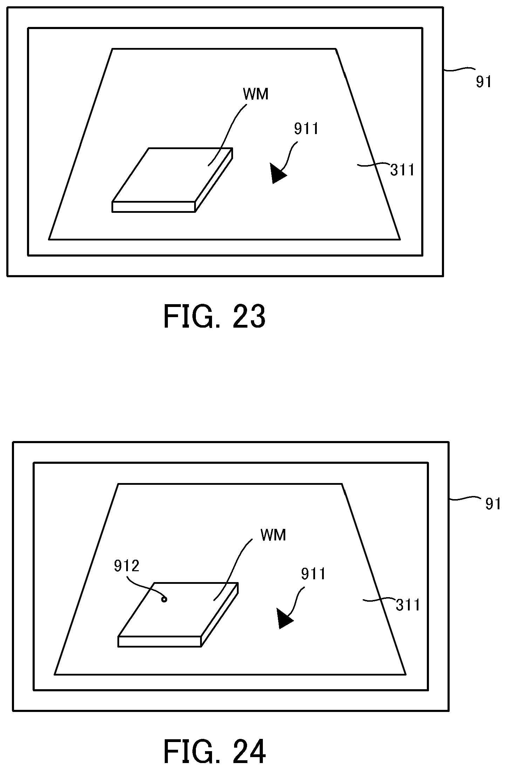

Then, the control apparatus 7 controls the display 91 to display the workpiece model WM on the basis of the workpiece information (a step S152). Namely, the control apparatus 7 controls the display 91 to display an image of the workpiece model WM having the shape represented by the workpiece information at a position represented by the workpiece information (namely, a position of the actual workpiece W) in the stage coordinate system. In this case, the control apparatus 7 may control the display 91 to display the workpiece model WM with the stage 3 (especially, the placement surface 311). Alternatively, the control apparatus 7 may control the display 91 to display the actual workpiece W (namely, an image of the actual workpiece W). For example, the control apparatus 7 may control the display 91 to display the imaged result by the imaging apparatus 82 that images the actual workpiece W. Note that FIG. 23 illustrate a display example of the workpiece model WM.

Then, the control apparatus 87 receives, from the user, an input for performing the alignment of the workpiece model WM and the processing model PM (namely, the alignment of the workpiece W and the processing model PM) (a step S153). The workpiece model WM is displayed at the step S152. Thus, at the step S153, the control apparatus 7 receives from the user, an input for designating the position of the processing model PM relative to the workpiece model WM displayed on the display 91. Therefore, the input apparatus 92 is referred, according to the present invention, to as a "designating apparatus".

The user designates as the position of the processing model PM, a position at which at least a part of the three-dimensional structural object ST should be formed by the additive processing (namely, a build position at which at least a part of the three-dimensional structural object ST should be built). The build position may include a position at which at least a part of the three-dimensional structural object ST that is formed by the additive processing distributes. The build position may include a position at which the additive processing for forming at least a part of the three-dimensional structural object ST is performed. Since the additive processing is performed at the above described additive processed position (typically, the light concentration position of the processing light EL), the build position may include a position at which the additive processed position is set in order to form at least a part of the three-dimensional structural object ST. Since the additive processing is performed at a position that is irradiated with the processing light EL (namely, a position at which the irradiation area EA is set), the build position may include the position that is irradiated with the processing light EL (namely, the position at which the irradiation area EA is set) in order to form at least a part of the three-dimensional structural object ST. Since the additive processing is performed at a position to which the build materials M are supplied (namely, a position at which the supply area MA is set), the build position may include the position to which the build materials M are supplied (namely, the position at which the supply area MA is set) in order to form at least a part of the three-dimensional structural object ST.

The user may designate, as the position of the processing model PM, a fiducial position that is usable as a fiducial in forming the three-dimensional structural object ST. The fiducial position may include a position at which the additive processing for forming the three-dimensional structural object ST starts (namely, a build start position). The fiducial position may include a position at which the additive processing for forming the three-dimensional structural object ST ends (namely, a build end position). The fiducial position may include a position at which a feature point of the three-dimensional structural object ST exists. At least one of a vertex, a corner, a point located at the most +Z side, a point located at the most -Z side, a point located at the most +X side, a point located at the most -X side, a point located at the most +Y side and a point located at the most -Y side is one example of the feature point of the three-dimensional structural object ST.

The user may designate, as the position of the processing model PM, a position that has a predetermined positional relationship relative to the above described build position and / or fiducial position, in addition to or instead of designating, as the position of the processing model PM, the above described build position and / or fiducial position itself. For example, the user may designate, as the position of the processing model PM, a position that is away from the above described build position and / or fiducial position toward a predetermined direction by a predetermined distance.

The user may designate the position of the processing model PM by using the input apparatus 92. In this case, the user may designate the position of the processing model PM on the display screen of the display 91 on which the workpiece model WM is displayed at the step S152. For example, as illustrated in the above described FIG. 23, the user may move a pointer 911 for designating the position of the processing model PM and designate, as the position of the processing model PM, a position of the pointer 911 at a timing when the pointer 911 is located at a position that is desired to be designated as the position of the processing model PM by using the input apparatus 92.

The user may designate the position of the processing model PM by using the guide light GL emitted by the above described guide light emitting apparatus 24. For example, the user may move the processing head 21 to move the plurality of guide lights GL relative to the workpiece W and designate, as the position of the processing model PM, the position at which the plurality of guide lights GL intersect at a timing when the plurality of guide lights GL intersect at the position that is desired to be designated as the position of the processing model PM by using the input apparatus 92.

The control apparatus 7 controls the display 91 to display the position that is designated as the position of the processing model PM with it being associated with the workpiece model WM. For example, as illustrated in FIG. 24 that illustrates a display example of the workpiece model WM, the control apparatus 7 may control the display 91 to display a display object 912 (in an example illustrated in FIG. 24, a display object indicating a white circle) that indicates the position designated as the position of the processing model PM in a display aspect that allows a positional relationship between the display object and the workpiece model WM to be determined.

Moreover, as illustrated in FIG. 24, the user may designate single position as the position of the processing model PM. In this case, the position that is designated by the user may be designated as a position of a certain part of the processing model PM (namely, a position at which a certain part of the three-dimensional structural object ST should be formed). Alternatively, an area that is defined by the position designated by the user may be designated as the position of the processing model PM (namely, a position (an area) at which the three-dimensional structural object ST should be formed). At least one of an area that includes the position designated by the user, an area that is centered on the position designated by the user, an area a vertex of which is at the position designated by the user and an area that is defined by a border including the position designated by the user is one example of the area that is defined by the position designated by the user.

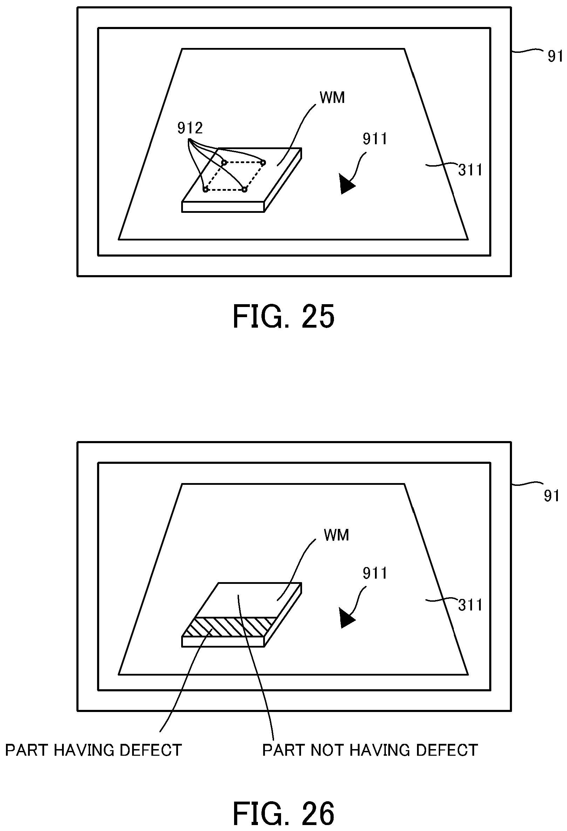

Alternatively, as illustrated in FIG. 25 that illustrates a display example of the workpiece model WM, the user may designate a plurality of positions as the position of the processing model PM. In this case, an area that is surrounded by the plurality of positions designated by the user (an area that is surrounded by a dashed-line in FIG. 25) may be designated as the position of the processing model PM (namely, the position (the area) at which the three-dimensional structural object ST should be formed).

Moreover, the user may designate, as the position of the processing model PM, single position and an attitude of the processing model PM.

Note that the designated position of the processing model PM may be referred to as a designated position and maybe referred to as a build fiducial position. The designated position (the build fiducial position) may be an origin point of the processing model PM, may be a build start point of the three-dimensional structural object ST that is formed on the basis of the processing model, and may be a point that has a known specific relationship relative to these points (the origin point, the build start point).

Here, as described above, the three-dimensional structural object ST is formed on the workpiece W. Thus, there is a high possibility that the user designates, as the build position, a position on the surface of the workpiece W. On the other hand, there is a possibility that a certain position on the surface of the workpiece W is not appropriate as the build position, depending on a state of the surface of the workpiece W. Specifically, there is a possibility that a surface part having a defect on the surface of the workpiece W is not appropriate as the build position. Note that the defect here may mean a defect that is an obstacle to the proper formation of the three-dimensional structural object ST. Thus, in order to reduce the possibility that the surface part having the defect on the surface of the workpiece W is designated as the build position, the control apparatus 7 may display the workpiece model WM in a display aspect that allows the surface part having the defect on the surface of the workpiece W to be distinguished from a surface part not having the defect on the surface of the workpiece W, as illustrated in FIG. 26 that illustrates a display example of the workpiece model WM. Incidentally, when the workpiece W is repaired by building the three-dimensional structural object ST on a part having the defect on the workpiece W, the surface part having the defect on the surface of the workpiece W may be designated as the build position.

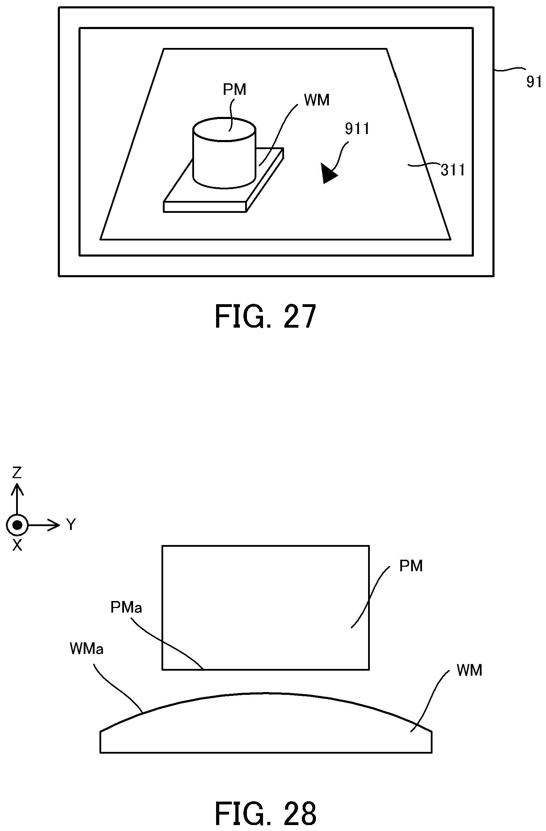

When the input for designating the position of the processing model PM is received, as illustrated in FIG. 27 that illustrates a display example on the display 91, the control apparatus 7 may control the display 91 to display the processing model PM (namely, an image of the processing model PM) with the workpiece model WM (alternatively, the actual workpiece W). Namely, the control apparatus 7 may control the display 91 to display the processing model PM that is disposed at the position designated by the user. In this case, the user may designate the position of the processing model PM by moving, on the display screen of the display 91 on which the processing model PM is displayed, the processing model PM by using the input apparatus 92. As a result, the user intuitively designates the position of the processing model PM.

The control apparatus 7 may receive, from the user, an input for designating an attitude of the processing model PM relative to the workpiece model WM, in addition to the input for designating the position of the processing model PM relative to the workpiece model WM. The control apparatus 7 may receive, from the user, an input for designating a size of the processing model PM relative to the workpiece model WM, in addition to the input for designating the position of the processing model PM relative to the workpiece model WM. In both cases, the user may designate the attitude and / or the size of the processing model PM by using the input apparatus 92. For example, the user may designate the position, the attitude and / or the attitude of the processing model PM by translating, scaling and / or rotating the processing model PM by using the input apparatus 92 on the display screen of the display 91 on which the processing model PM is displayed.

After the alignment of the workpiece model WM and the processing model PM at the step S153 is completed, the position (furthermore, the attitude and / or the size) of the processing model PM in the stage coordinate system fixed. Thus, the control apparatus 7 generates the processing position information relating to the position of the processing model PM in the stage coordinate system. As a result, the control apparatus 7 generates the processing information in which the processing position information relating to the position of the processing model PM is associated with the processing shape information relating to the shape of the processing model PM (a step S154). Namely, the control apparatus 7 generates the processing information relating to the processing model PM the position and the shape in the stage coordinate system of which are fixed.

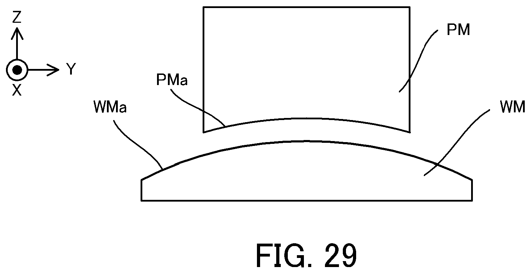

However, the control apparatus 7 may modify the processing information generated at the step S154, if needed. For example, as described above, the three-dimensional structural object ST is formed on the workpiece W. Namely, the alignment of the processing model PM and the workpiece model WM is performed so that the processing model PM is disposed on the workpiece model WM. In this case, there is a possibility that such a technical problem occurs that the three-dimensional structural object ST cannot be formed on the workpiece W by using the processing information generated at the step S154, depending on a relationship between a shape of a surface of the processing model PM facing toward the workpiece model WM and a shape of a surface of the workpiece model WM facing toward the processing model PM. Specifically, as illustrated in FIG. 28 that is a cross-sectional view illustrating the workpiece model WM and the processing model PM, when the shape of a surface PMa (a surface facing toward the -Z side in FIG. 28) of the processing model PM facing toward the workpiece model WM and the shape of a surface WMa (a surface facing toward the +Z side in FIG. 28) of the workpiece model WM facing toward the processing model PM do not have a complementary relationship, there is a possibility that using the processing information results in a gap between the three-dimensional structural object ST and the workpiece W. Alternatively, there is a possibility that using the processing information results in the formation of the three-dimensional structural object ST that partially enters the workpiece W. Thus, when the shape of the surface PMa and the shape of the surface WMa do not have the complementary relationship, the control apparatus 7 may modify the processing information. Specifically, as illustrated in FIG. 29 that is a cross-sectional view conceptually illustrating a modification example of the processing information with the processing model PM and the workpiece model WM, the control apparatus 7 may modify the processing information (especially, the processing shape information) so that the shape of the surface PMa of the processing model PM represented by the modified processing model PM and the shape of the surface WMa of the workpiece model WM have the complementary relationship.

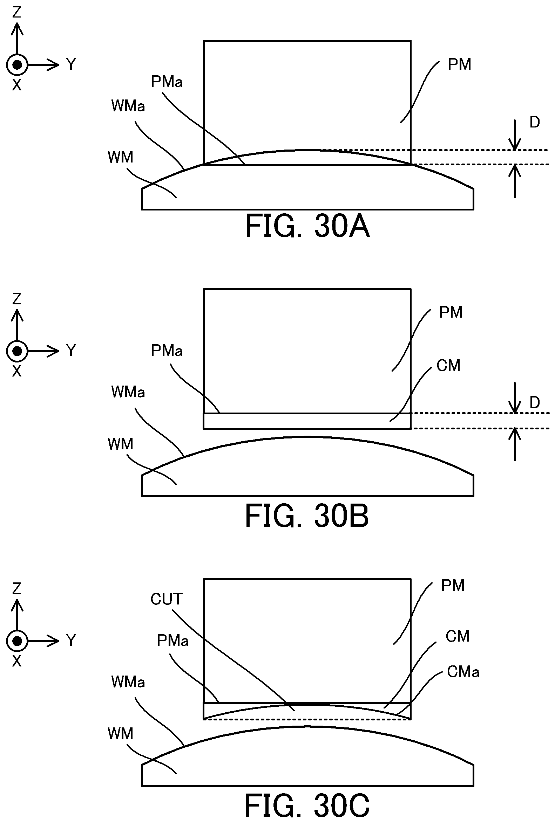

FIG. 30A to FIG. 30C illustrate one example of a method of modifying the processing information as illustrated in FIG. 29. Each of FIG. 30A to FIG. 30C is a cross-sectional view that conceptually illustrates one example of the method of modifying the processing information with the processing model PM and the workpiece model WM. In this case, as illustrated in FIG. 30A, the control apparatus 7 makes the processing model PM be closer to the workpiece model WM until there is no gap between the surface PMa of the processing model PM and the surface WMa of the workpiece model WM. Namely, the control apparatus 7 makes the processing model PM enter the workpiece model WM until there is no gap between the surface PMa of the processing model PM and the surface WMa of the workpiece model WM. Then, the control apparatus 7 calculates a thickness (namely, an entering amount of the processing model PM relative to the workpiece model WM) D of an overlapped part of the processing model PM and the workpiece model WM. Then, as illustrated in FIG. 30B, the control apparatus 7 adds, to the unmodified surface PMa of the processing model PM, a margin model CM that is a three-dimensional model corresponding to a build object having the thickness D. Then, as illustrated in FIG. 30C, the control apparatus 7 partially cuts the margin model CM so that a surface CMa of the margin model CM facing toward the workpiece model WM and the shape of the surface WMa of the workpiece model WM have the complementary relationship. As a result, a three-dimensional model including the partially cut margin model CM and the processing model PM is used as a new (namely, modified) processing model PM Therefore, the control apparatus 7 may modify the processing information (especially, the processing shape information) so that the modified processing information include information relating to a position and a shape of the three-dimensional model (namely, the modified processing model PM) including the partially cut margin model CM and the unmodified processing model PM.

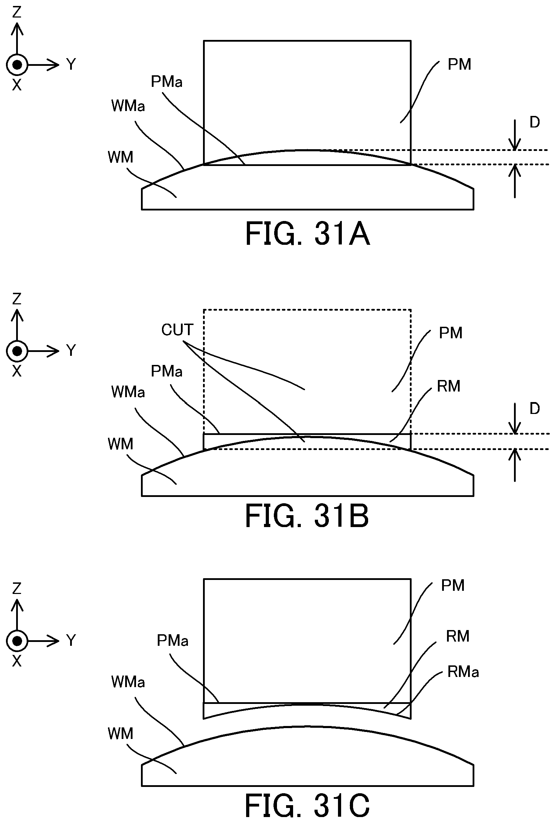

FIG. 31A to FIG. 31C illustrate another example of the method of modifying the processing information as illustrated in FIG. 29. Each of FIG. 31A to FIG. 31C is a cross-sectional view that conceptually illustrates another example of the method of modifying the processing information with the processing model PM and the workpiece model WM. In this case, as illustrated in FIG. 31A, the control apparatus 7 makes the processing model PM be closer to the workpiece model WM until there is no gap between the surface PMa of the processing model PM and the surface WMa of the workpiece model WM. Then, the control apparatus 7 calculates the thickness (namely, the entering amount of the processing model PM relative to the workpiece model WM) D of the overlapped part of the processing model PM and the workpiece model WM. Then, as illustrated in FIG. 31B, the control apparatus 7 cuts a part of the processing model PM that overlaps with the workpiece model WM. Furthermore, the control apparatus 7 cuts a part of the processing model PM other than a lower edge part having the thickness D. As a result, a part of the processing model PM that is the lower edge part having the thickness D and that does not overlap with the workpiece model WM remains as a repaired model RM. A shape of a surface RMa of the repaired model RM facing toward the workpiece model WM and the shape of the surface WMa of the workpiece model WM have the complementary relationship. This repaired model RM may be regarded to be equivalent to a three-dimensional model of a build object that fills the gap between the surface PMa of the processing model PM and the surface WMa of the workpiece model WM. Then, as illustrated in FIG. 31C, the repaired model RM is added to a lower edge of the processing model PM. As a result, a three-dimensional model including the repaired model RM and the processing model PM is used as a new (namely, modified) processing model PM Therefore, the control apparatus 7 may modify the processing information (especially, the processing shape information) so that the modified processing information include information relating to a position and a shape of the three-dimensional model (namely, the modified processing model PM) including the repaired model RM and the unmodified processing model PM.

Note that a model relating to a margin for cutting the three-dimensional structural object ST formed on the workpiece W from the workpiece W may be added to the processing model PM, when the processing information is modified.

### (2-4) Processing Operation

Next, the processing operation will be described. The processing operation is an operation of actually forming the three-dimensional structural object ST on the workpiece W.

As described above, the processing system SYS forms the three-dimensional structural object ST by the Laser Metal Deposition. Thus, the processing system SYS may form the three-dimensional structural object ST by performing an existing processing operation (a build operation in this case) based on the Laser Metal Deposition. One example of the processing operation of forming the three-dimensional structural object ST by using the Laser Metal Deposition will be briefly described in the below described description.

The processing system SYS forms the three-dimensional structural object ST, the position and the shape of which is determined by the above described processing model alignment operation, on the workpiece W, the position and the shape of which is determined by the above described workpiece model alignment operation. Namely, the processing system SYS forms the three-dimensional structural object ST having the desired shape at a desired position on the workpiece W on the basis of the workpiece information that is generated by the above described workpiece model alignment operation and the processing information that is generated by the above described processing model alignment operation.

The processing system SYS sequentially forms a plurality of layered partial structural objects (it is referred to as a "structural layer" in the below described description) SL that are arranged along the Z axis direction in order to form the three-dimensional structural object ST, for example. For example, the processing system SYS forms, one by one, the plurality of structural layers SL that are obtained by slicing the three-dimensional structural object ST along the Z axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in sequence will be described.

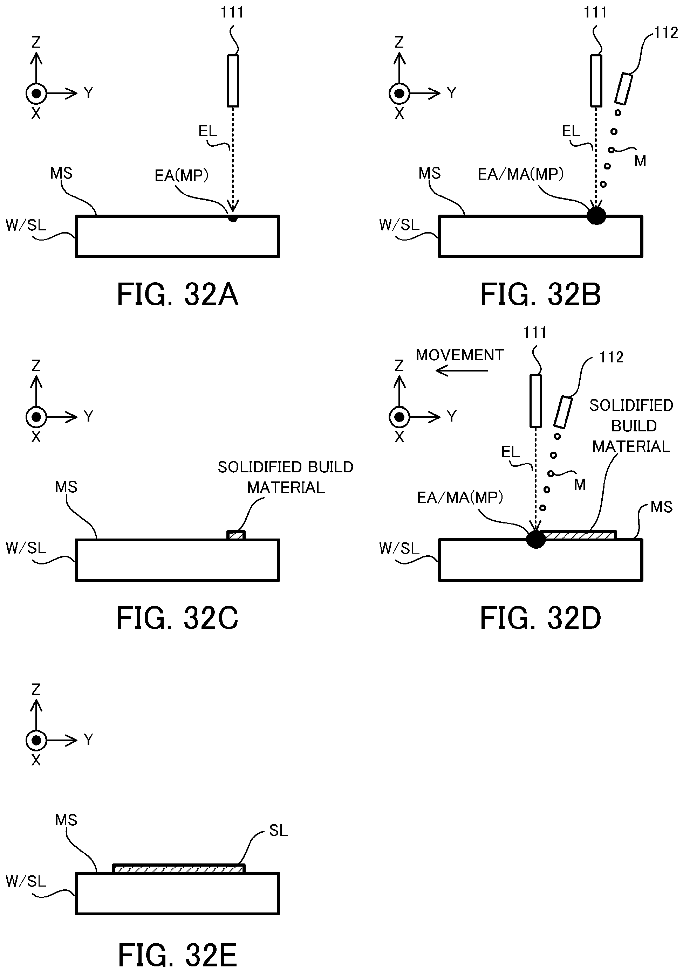

Firstly, with reference to FIG. 32A to FIG. 32C, an operation for forming each structural layer SL will be described. The processing system SYS sets the irradiation area EA at a desired area on the build surface MS that corresponds to a surface of the workpiece W or a surface of the formed structural layer SL and emits the processing light EL from the irradiation optical system 211 to the irradiation area EA under the control of the control apparatus 7. Note that an area on the build surface MS that is occupied by the processing light EL emitted from the irradiation optical system 211 may be referred to as the irradiation area EA. In the present embodiment, the light concentration position (namely, a condensed position) of the processing light EL is coincident with the build surface MS. As a result, as illustrated in FIG. 32A, the melt pool (namely, a pool of a metal molten by the processing light EL) MP is formed at the desired area on the build surface MS by the processing light EL emitted from the irradiation optical system 211. Moreover, the processing system SYS sets the supply area MA at the desired area on the build surface MS and supplies the build materials M to the supply area MA from the material nozzle 212 under the control of the control apparatus 7. Here, since the irradiation area EA is coincident with the supply area MA as described above, the supply area MA is set at an area at which the melt pool MP is formed. Thus, the processing system SYS supplies the build materials M to the melt pool MP from the material nozzle 212, as illustrated in FIG. 32B. As a result, the build materials M supplied to the melt pool MP are molten. When the melt pool MP is not irradiated with the processing light EL due to the movement of the processing head 21, the build materials M molten in the melt pool MP are cooled and solidified again (namely, coagulated). As a result, as illustrated in FIG. 32C, the solidified build materials M are deposited on the build surface MS. Namely, a build object is formed by a deposition of the solidified build materials M.

A series of build process including the formation of the melt pool MP by the irradiation of the processing light EL, the supply of the build materials M to the melt pool MP, the melting of the supplied build materials M and the solidification of the molten build materials M is repeated while relatively moving the processing head 21 relative to the build surface MS along the XY plane, as illustrated in FIG. 32D. Namely, when the processing head 21 relatively moves relative to the build surface MS, the irradiation area EA also relatively moves relative to the build surface MS. Therefore, the series of build process is repeated while relatively moving the irradiation area EA relative to the build surface MS along the XY plane (namely, in a two-dimensional plane). In this case, the irradiation area EA set at the area on which the build object should be formed on the build surface MS is selectively irradiated with the processing light EL and the irradiation area EA set at an area on which the build object should not be formed on the build surface MS is not selectively irradiated with the processing light EL (it can be said that the irradiation area EA is not set at the area on which the build object should not be formed). Namely, the processing system SYS moves the irradiation area EA along a predetermined moving trajectory on the build surface MS and irradiates the build surface MS with the processing light EL at a timing based on an aspect of a distribution of an area on which the build object should be formed. Note that the aspect of the distribution of an area on which the build object should be formed may be referred to as a distribution pattern and a pattern of the structural layer SL. As a result, the melt pool MP also moves on the build surface MS along a moving trajectory based on the moving trajectory of the irradiation area EA. Specifically, the melt pool MP is formed in series at a part that is irradiated with the processing light EL in the area along the moving trajectory of the irradiation area EA on the build surface MS. Moreover, since the irradiation area EA is coincident with the supply area MA as described above, the supply area MA also moves on the build surface MS along a moving trajectory based on the moving trajectory of the irradiation area EA. As a result, as illustrated in FIG. 32E, the structural layer SL that is an aggregation of the build object of the solidified build materials M is formed on the build surface MS. Namely, the structural layer SL that is an aggregation of the build object formed in a pattern based on the moving trajectory of the melt pool MP on the build surface MS (namely, the structural layer SL having a shape based on the moving trajectory of the melt pool MP in a planar view) is formed. Incidentally, when the irradiation area EA is set at the area on which the build object should not be formed, the irradiation area EA may be irradiated with the processing light EL and the supply of the build materials M may be stopped. Moreover, when the irradiation area EA is set at the area on which the build object should not be formed, the build materials M may be supplied to the irradiation area EL and the irradiation area EL may be irradiated with the processing light EL having an intensity by which the melt pool MP is not formed. Incidentally, although the irradiation area EA is moved relative to the build surface MS in the above described description, the build surface MS may be moved relative to the irradiation area EA.

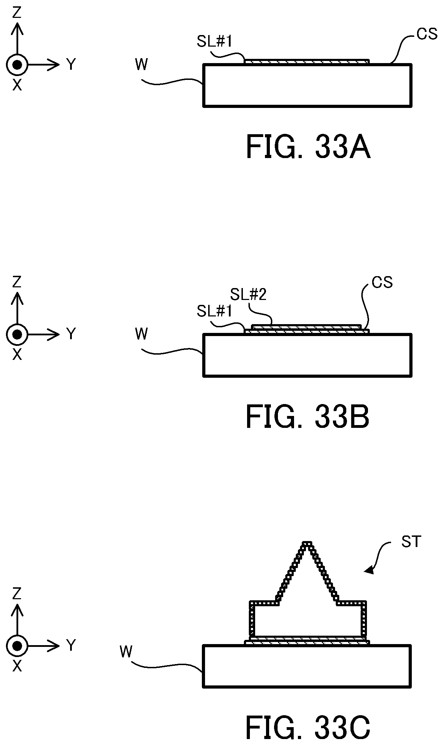

The processing system SYS repeats the operation for forming the structural layer SL on the basis of the processing information (namely, the information relating to the processing model PM) under the control of the control apparatus 7. Specifically, a slice data is firstly generated by performing a slicing process on the processing model PM represented by the processing information by a layer pitch. Note that a data obtained by partially modifying the slice data on the basis of a characteristic of the processing system SYS may be used. The processing system SYS performs an operation for forming the first structural layer SL#1 on the build surface MS that corresponds to the surface of the workpiece W on the basis of the three-dimensional model data corresponding to a structural layer SL#1, namely, the slice data corresponding to the structural layer SL#1. For example, the processing system SYS may operate by using information relating to a tool path, which is a trajectory of the irradiation area EA (the supply area MA) that passes an area t which the structural layer SL#1 exists, of the slice data corresponding to the structural layer SL#1. As a result, as illustrated in FIG. 33A, the structural layer SL#1 is formed on the build surface MS. Then, the processing system SYS sets the surface (namely, an upper surface) of the structural layer SL#1 to a new build surface MS and forms a second structural layer SL#2 on the new build surface MS. In order to form the structural layer SL#2, firstly, the control apparatus 7 controls the head driving system 22 so that the processing head 21 moves along the Z axis direction. Specifically, the control apparatus 7 controls the head driving system 22 to move the processing head 21 toward the +Z axis side so that the irradiation area EA and the supply area MA are set on the surface of the structural layer SL#1 (namely, the new build surface MS). By this, the light concentration position of the processing light EL is coincident with the new build surface MS. Then, the processing system SYS forms the structural layer SL#2 on the structural layer SL#1 on the basis of the slice data corresponding to the structural layer SL#2 by the operation that is the same as the operation for forming the structural layer SL#1 under the control of the control apparatus 7. As a result, as illustrated in FIG. 33B, the structural layer SL#2 is formed. Then, the same operation is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 33C.

### (3) Technical Effect of Processing System SYS

As described above, the processing system in the present embodiment properly performs the additive processing on the workpiece W.

The processing system SYS generates the workpiece information by the workpiece model alignment operation and forms the three-dimensional structural object ST on the workpiece W the position and the shape of which are determined by the generated workpiece information. Thus, the processing system SYS forms the three-dimensional structural object ST on the workpiece W more properly, compared to the case where the workpiece information is not used. Moreover, since the workpiece information is mainly generated by the processing system SYS, a load of the user is reduced, compared to the case where the user generates the workpiece information.

The processing system SYS generates the processing position information by the processing model alignment operation and forms, on the workpiece W, the three-dimensional structural object ST the position of which is determined by the generated processing position information. Thus, the processing system SYS forms the three-dimensional structural object ST on the workpiece W more properly, compared to the case where the processing position information is not used. Moreover, since the processing position information is mainly generated by the processing system SYS, a load of the user is reduced, compared to the case where the user generates the processing position information.

### (4) Modified Example

### (4-1) Modified Example relating to Stage Driving System 32

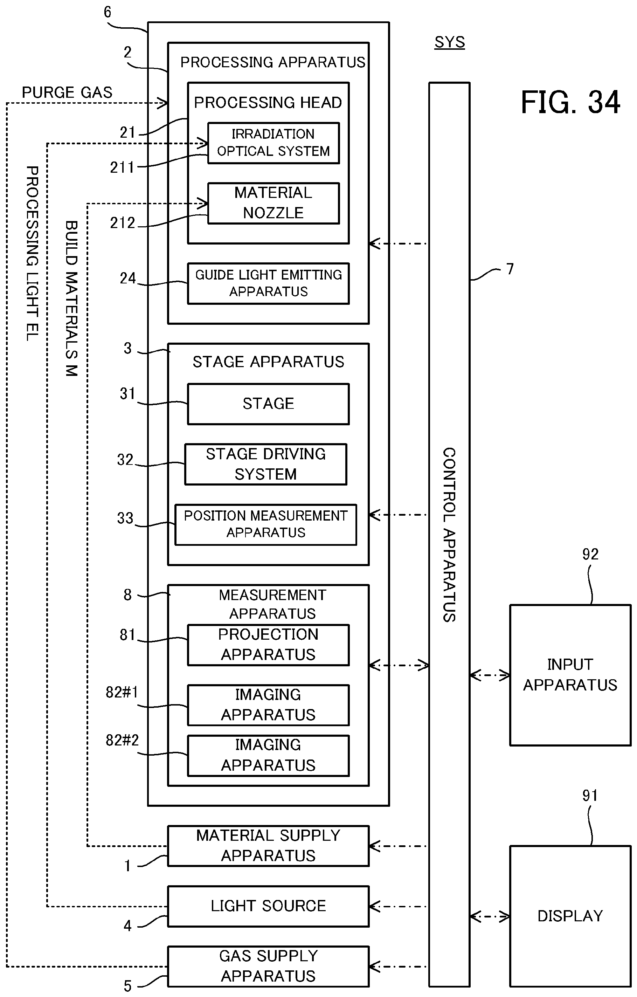

As illustrated in FIG. 34 that illustrates another example of the system configuration of the processing system SYS, the stage apparatus 3 may be provided with a stage driving system 32 for moving the stage 31. The stage driving system 32 may move the stage 31 in the chamber space 63IN. The stage driving system 32 may move the stage 31 along at least one of the X axis, the Y axis and the Z axis. When the stage 31 moves along at least one of the X axis and the Y axis, each of the irradiation area EA and the supply area MA moves on the workpiece W along at least one of the X axis and the Y axis. Furthermore, the stage driving system 32 may move the stage 31 along at least one of the θX direction, the θY direction and the θZ direction, in addition to or instead of at least one of the X axis, the Y axis and the Z axis. The stage driving system 32 includes a motor or the like, for example.

When the processing system SYS is provided with the stage driving system 32, the stage apparatus 3 is further provided with a position measurement apparatus 33. The position measurement apparatus 33 is configured to measure a position of the stage 31. The position measurement apparatus 33 may include at least one of an encoder and a laser interferometer, for example.

When the processing system SYS is provided with the stage driving system 32, the processing apparatus 2 may not be provided with the head driving system 22. However, even when the processing system SYS is provided with the stage driving system 32, the processing apparatus 2 may be provided with the head driving system 22. When the processing apparatus 2 is not provided with the head driving system 22, the processing apparatus 2 may not be provided with the position measurement apparatus 23.

When the processing system SYS is provided with the stage driving system 32, the stage driving system 32 may move the stage 31 so that the beam detector 325 (the aperture 324) is irradiated with the processing light EL at the above described step S112 in FIG. 4 that illustrates the flow of the above described coordinate matching operation for associating the processing coordinate system and the stage coordinate system. Moreover, at the step S113 in FIG. 4, the control apparatus 7 may modify the positions of the pins 312 in the stage coordinate system, which is the information already known to the control apparatus 7, on the basis of a moving distance of the stage 31, and may determine that the position in the processing coordinate system of the processing head 21 that is in the state where it is allowed to irradiate the pin 312 with the processing light EL and the position in the stage coordinate system at which the pin 312 is formed are positions that should be associated with each other. However, when the processing system SYS is not provided with the head driving system 22 (namely, the processing head 21 does not move), the processing coordinate system may not be used, and in this case, the above described processes from the step S111 to the step S113 that illustrates the flow of the coordinate matching operation for associating the processing coordinate system and the stage coordinate system may not be performed.

When the processing system SYS is provided with the stage driving system 32, the position measurement apparatus 33 may measure the position of the stage 31 when the measurement apparatus 8 measures the fiducial member 34 at the above described step S115 in FIG. 4 that illustrates the flow of the above described coordinate matching operation for associating the measurement coordinate system and the stage coordinate system. Moreover, at the step S116 in FIG. 4, the control apparatus 7 may associate the measurement coordinate system with the stage coordinate system on the basis of the measured result by the measurement apparatus 8 at the step S115 and the measured result of the stage 31 when the measurement apparatus 8 measures the fiducial member 34 at the step S115. Specifically, the control apparatus 7 determines the position of the fiducial mark 343 in the measurement coordinate system on the basis of the measured result by the measurement apparatus 8. Furthermore, as described above, the information relating to the positional relationship between the fiducial marks 343 and the through-holes 342 (namely, the positional relationship between the fiducial marks 343 and the pins 312) is the information that is already known to the control apparatus 7. Thus, the control apparatus 7 determines the positions of the through-holes 322 and the pins 312 in the measurement coordinate system on the basis of the information relating to the position of the fiducial marks 343 in the measurement coordinate system and the information relating to the positional relationship between the fiducial marks 343 and the through-holes 342. Furthermore, as described above, the information relating to the position of the pins 312 in the stage coordinate system is the information that is already known to the control apparatus 7. As a result, the control apparatus 7 determines that the position of the pin 312 in the measurement coordinate system and the position of the pin 312 in the stage coordinate system are positions that should be associated with each other. However, when the stage 31 moves by the stage driving system 32, the positions of the pins 31 in the stage coordinate system are modified by the moving distance of the stage 31 by the stage driving system 32. In this case, the control apparatus 7 determines that the position of the pin 312 in the measurement coordinate system and the modified position of the pin 312 in the stage coordinate system are positions that should be associated with each other. As a result, the control apparatus 7 associates the measurement coordinate system with the stage coordinate system on the basis of such a determined result that the specific position in the measurement coordinate system and the specific position in the stage coordinate system are positions that should be associated with each other.

When the processing system SYS is provided with the stage driving system 32, the stage driving system 32 may move the stage 31 to satisfy the position condition that the user designated point that is designated at the step S143 in FIG. 17 and the processing apparatus 2 have the desired third positional relationship at the above described step S144 in FIG. 17 that illustrates the flow of the above described third workpiece model alignment operation. Moreover, at the step S145 in FIG. 17, the position measurement apparatus 33 may measure the position of the stage 31 at the timing when the position condition is satisfied, after the stage 31 moves to satisfy the position condition that the user designated point and the processing apparatus 2 have the desired third positional relationship.

### Description of Reference Codes

- SYS: processing system
- 1: material supply apparatus
- 2: processing apparatus
- 21: processing head
- 211: irradiation optical system
- 212: material nozzle
- 22: head driving system
- 24: guide light emitting apparatus
- 3: stage apparatus
- 31: stage
- 311: placement surface
- 7: control apparatus
- 8: measurement apparatus
- 81: projection apparatus
- 82: imaging apparatus
- 91: display
- 92: input apparatus
- W: workpiece
- M: build material
- SL: structural layer
- MS: build surface
- EA: irradiation area
- MA: supply area
- MP: melt pool
- EL: processing light
- DL: measurement light
- GL: guide light
- WM: workpiece model
- PM: processing model

## Claims

1. A build system (SYS) configured to build a build object (ST) on an object (W),
the build system (SYS) comprising:
a support apparatus (31) configured to support an object;
an additive processing apparatus (2) configured to perform an additive processing on the object;
a position change apparatus (22, 32) configured to change a relative positional relationship between the support apparatus and an additive processed position which is processed by the additive processing apparatus;
the build system (SYS) being **characterised by**:
a position measurement apparatus (23) configured to measure a position of a part of the object;
a display apparatus (91) configured to display an image (WM) relating to the object;
a designating apparatus (92) configured to designate a position for the build object (ST) on the object (W) using the image displayed by the display apparatus, and
a control apparatus (7) configured to control the additive processing apparatus and position change apparatus to build the build object on the object on the basis of the designated position and the measured position.

2. The build system (SYS) according to claim 1, wherein
the build system (2) comprises an input apparatus (92) as the designating apparatus configured for inputting information for designating the designated position on the object (W).

3. The build system (SYS) according to claim 2, wherein
the input apparatus (92) allows the information to be inputted on a screen in which the image (WM) is displayed.

4. The build system (SYS) according to claim 2 or 3, wherein
the input apparatus (92) comprises a keyboard into which the information is inputted.

5. The build system (SYS) according to any one of claims 2 to 4, wherein
the input apparatus is configured for inputting information relating to a 3D model (PM) of the build object (ST),
the display apparatus (91) is configured to display the designated position (912) associated with the 3D model.

6. The build system (SYS) according to any one of claims 2 to 5, wherein
the display apparatus (91) is configured to display the image (WM) relating to the object and to display the designated position (912) in association with the image of the object.

7. The build system (SYS) according to any one of claims 1 to 6, wherein
the build apparatus (2) comprises a supply apparatus (212) configured to supply materials (M) to a build position,
a positional relationship between the designated position and the build position is a predetermined relationship.

8. The build system (SYS) according to any one of claims 1 to 7, wherein
the build apparatus (2) comprises a supply apparatus (212) configured to supply materials (M) to a build position,
the designated position is the build position.

9. The build system (SYS) according to claim 7 or 8, wherein
the build apparatus (2) comprises a beam irradiation apparatus (211) configured to irradiate the build position with an energy beam (EL).

10. The build system (SYS) according to any one of claims 7 to 9, wherein
the build system further comprises:
a guide light irradiation apparatus (24) configured to irradiate the build position with a guide light (GL); and
an imaging apparatus (82) configured to image the object (W) and the guide light with which the object is irradiated.

11. The build system (SYS) according to claim 10, wherein
the display apparatus (91) is configured to display the image (WM) of the object (W) and an image of the guide light (GL) with which the object is irradiated.

12. The build system (SYS) according to any one of claims 1 to 11, wherein
the display apparatus (91) is configured to display an image (WM) of an object (W) having a defect part and the designated position that is displayed in association with an image of the defect part.

13. A build method of building a build object on an object,
the build method comprising:
supporting an object with a support apparatus;
displaying an image (WM) relating to the object with a display apparatus;
the built method being **characterised by**:
designating a position on the build object position that is to be built on the object using the displayed image with a designating apparatus;
measuring a position of a part of the object with a measurement apparatus;
changing a relative positional relationship between the support apparatus and an additive processed position of the additive processing apparatus with a position change apparatus;
and performing an additive processing on the object with an additive processing apparatus to build a build object on the object, with controlling the additive processing apparatus and the position change apparatus to build the build object on the object on the basis of the designated position and the measured position.

## Patentansprüche

1. Aufbausystem (SYS), das ausgestaltet ist, um ein Bauobjekt (ST) auf einem Objekt (W) zu bauen,
wobei das Aufbausystem (SYS) Folgendes aufweist:
eine Stützvorrichtung (31), die ausgestaltet ist, um ein Objekt zu tragen;
eine additive Bearbeitungsvorrichtung (2), die ausgestaltet ist, um eine additive Bearbeitung an dem Objekt durchzuführen;
eine Positionsänderungsvorrichtung (22, 32), die ausgestaltet ist, um eine relative Positionsbeziehung zwischen der Stützvorrichtung und einer additiv bearbeiteten Position zu ändern, die von der additiven Bearbeitungsvorrichtung bearbeitet wird;
wobei das Aufbausystem (SYS) durch Folgendes gekennzeichnet ist:
eine Positionsmessvorrichtung (23), die ausgestaltet ist, um eine Position eines Teils des Objekts zu messen;
eine Anzeigevorrichtung (91), die ausgestaltet ist, um ein Bild (WM) bezüglich des Objekts anzuzeigen;
eine Bestimmungsvorrichtung (92), die ausgestaltet ist, um eine Position für das Bauobjekt (ST) auf dem Objekt (W) unter Verwendung des von der Anzeigevorrichtung angezeigten Bildes zu bestimmen, und
eine Steuervorrichtung (7), die ausgestaltet ist, um die additive Bearbeitungsvorrichtung und die Positionsänderungsvorrichtung zu steuern, um das Bauobjekt auf dem Objekt auf der Grundlage der bestimmten Position und der gemessenen Position zu bauen.

2. Aufbausystem (SYS) nach Anspruch 1, wobei
das Aufbausystem (2) eine Eingabevorrichtung (92) als die Bestimmungsvorrichtung aufweist, die zur Eingabe von Informationen zur Bestimmung der bestimmten Position auf dem Objekt (W) ausgestaltet ist.

3. Aufbausystem (SYS) nach Anspruch 2, wobei
die Eingabevorrichtung (92) es der Information erlaubt, auf einem Bildschirm, auf dem das Bild (WM) angezeigt wird, eingegeben zu werden.

4. Aufbausystem (SYS) nach Anspruch 2 oder 3, wobei
die Eingabevorrichtung (92) eine Tastatur aufweist, in welche die Informationen eingegeben werden.

5. Aufbausystem (SYS) nach einem der Ansprüche 2 bis 4, wobei
die Eingabevorrichtung zur Eingabe von Informationen ausgestaltet ist, die sich auf ein 3D-Modell (PM) des Bauobjekts (ST) beziehen,
die Anzeigevorrichtung (91) ausgestaltet ist, um die mit dem 3D-Modell zusammenhängende bestimmte Position (912) anzuzeigen.

6. Aufbausystem (SYS) nach einem der Ansprüche 2 bis 5, wobei
die Anzeigevorrichtung (91) ausgestaltet ist, um das Bild (WM), das sich auf das Objekt bezieht, anzuzeigen und um die bestimmte Position (912) im Zusammenhang mit dem Bild des Objekts anzuzeigen.

7. Aufbausystem (SYS) nach einem der Ansprüche 1 bis 6, wobei
die Aufbauvorrichtung (2) eine Zuführvorrichtung (212) aufweist, die ausgestaltet ist, um Materialien (M) zu einer Aufbauposition zuzuführen,
eine Positionsbeziehung zwischen der bestimmten Position und der Aufbauposition eine vorgegebene Beziehung ist.

8. Aufbausystem (SYS) nach einem der Ansprüche 1 bis 7, wobei
die Aufbauvorrichtung (2) eine Zuführvorrichtung (212) aufweist, die ausgestaltet ist, um Materialien (M) zu einer Aufbauposition zuzuführen,
die bestimmte Position die Bauposition ist.

9. Aufbausystem (SYS) nach Anspruch 7 oder 8, wobei
die Aufbauvorrichtung (2) eine Strahlenbestrahlungsvorrichtung (211) aufweist, die ausgestaltet ist, um die Aufbauposition mit einem Energiestrahl (EL) zu bestrahlen.

10. Aufbausystem (SYS) nach einem der Ansprüche 7 bis 9, wobei das Aufbausystem ferner Folgendes aufweist:
eine Führungslichtbestrahlungsvorrichtung (24), die ausgestaltet ist, um die Aufbauposition mit einem Führungslicht (GL) zu bestrahlen; und
eine Bildgebungsvorrichtung (82), die ausgestaltet ist, um das Objekt (W) und das Führungslicht, mit dem das Objekt bestrahlt wird, abzubilden.

11. Aufbausystem (SYS) nach Anspruch 10, wobei
die Anzeigevorrichtung (91) ausgestaltet ist, um das Bild (WM) des Objekts (W) und ein Bild des Führungslichts (GL), mit dem das Objekt bestrahlt wird, anzuzeigen.

12. Aufbausystem (SYS) nach einem der Ansprüche 1 bis 11, wobei
die Anzeigevorrichtung (91) ausgestaltet ist, um ein Bild (WM) eines Objekts (W) mit einem defekten Teil und der bestimmten Position anzuzeigen, die im Zusammenhang mit einem Bild des defekten Teils angezeigt wird.

13. Verfahren zum Aufbauen eines Bauobjekts auf einem Objekt, wobei das Verfahren Folgendes aufweist:
Tragen eines Objekts mit einer Stützvorrichtung;
Anzeigen eines Bildes (WM), das sich auf das Objekt bezieht, mit einer Anzeigevorrichtung;
wobei das Verfahren durch Folgendes gekennzeichnet ist:
Bestimmen einer Position auf der Position des auf dem Objekt zu bauenden Bauobjekts, unter Verwendung des angezeigten Bildes mit einer Bestimmungsvorrichtung;
Messen einer Position eines Teils des Objekts mit einer Messvorrichtung;
Ändern einer relativen Positionsbeziehung zwischen der Stützvorrichtung und einer additiv bearbeiteten Position der additiven Bearbeitungsvorrichtung mit einer Positionsänderungsvorrichtung; und Durchführen einer additiven Bearbeitung an dem Objekt mit einer additiven Bearbeitungsvorrichtung, um ein Bauobjekt auf dem Objekt aufzubauen, mit
Steuern der additiven Verarbeitungsvorrichtung und der Positionsänderungsvorrichtung, um das Bauobjekt auf dem Objekt basierend auf der bestimmten Position und der gemessenen Position aufzubauen.

## Revendications

1. Système de construction (SYS) conçu pour construire un objet de construction (ST) sur un objet (W),
le système de construction (SYS) comprenant :
un appareil de support (31) conçu pour supporter un objet ;
un appareil de traitement additif (2) conçu pour mettre en œuvre un traitement additif sur l'objet ;
un appareil de changement de position (22, 32) conçu pour modifier une relation de position relative entre l'appareil de support et une position traitée additivement qui est traitée par l'appareil de traitement additif ;
le système de construction (SYS) étant **caractérisé par** :
un appareil de mesure de position (23) conçu pour mesurer une position d'une partie de l'objet ;
un appareil d'affichage (91) conçu pour afficher une image (WM) par rapport à l'objet ;
un appareil de désignation (92) conçu pour désigner une position pour l'objet de construction (ST) sur l'objet (W) à l'aide de l'image affichée par l'appareil d'affichage, et
un appareil de commande (7) conçu pour commander l'appareil de traitement additif et l'appareil de changement de position pour construire l'objet de construction sur l'objet sur la base de la position désignée et de la position mesurée.

2. Système de construction (SYS) selon la revendication 1, dans lequel
le système de construction (2) comprend un appareil d'entrée (92) en tant qu'appareil de désignation conçu pour entrer des informations pour désigner la position désignée sur l'objet (W).

3. Système de construction (SYS) selon la revendication 2, dans lequel
l'appareil d'entrée (92) permet d'entrer les informations devant être entrées sur un écran dans lequel l'image (WM) est affichée.

4. Système de construction (SYS) selon la revendication 2 ou la revendication 3, dans lequel
l'appareil d'entrée (92) comprend un clavier dans lequel les informations sont entrées.

5. Système de construction (SYS) selon l'une quelconque des revendications 2 à 4, dans lequel
l'appareil d'entrée est conçu pour entrer des informations relatives à un modèle 3D (PM) de l'objet de construction (ST),
l'appareil d'affichage (91) est conçu pour afficher la position désignée (912) associée au modèle 3D.

6. Système de construction (SYS) selon l'une quelconque des revendications 2 à 5, dans lequel
l'appareil d'affichage (91) est conçu pour afficher l'image (WM) relative à l'objet et pour afficher la position désignée (912) en association avec l'image de l'objet.

7. Système de construction (SYS) selon l'une quelconque des revendications 1 à 6, dans lequel
l'appareil de construction (2) comprend un appareil d'alimentation (212) conçu pour fournir des matériaux (M) à une position de construction,
une relation de position entre la position désignée et la position de construction est une relation prédéterminée.

8. Système de construction (SYS) selon l'une quelconque des revendications 1 à 7, dans lequel
l'appareil de construction (2) comprend un appareil d'alimentation (212) conçu pour fournir des matériaux (M) à une position de construction,
la position désignée est la position de construction.

9. Système de construction (SYS) selon la revendication 7 ou la revendication 8, dans lequel
l'appareil de construction (2) comprend un appareil d'irradiation par faisceau (211) configuré pour irradier la position de construction avec un faisceau d'énergie (EL).

10. Système de construction (SYS) selon l'une quelconque des revendications 7 à 9, dans lequel le système de construction comprend en outre :
un appareil d'irradiation de lumière guide (24) conçu pour irradier la position de construction avec une lumière guide (GL) ; et
un appareil d'imagerie (82) conçu pour imager l'objet (W) et la lumière guide avec laquelle l'objet est irradié.

11. Système de construction (SYS) selon la revendication 10, dans lequel
l'appareil d'affichage (91) est conçu pour afficher l'image (WM) de l'objet (W) et une image de la lumière guide (GL) avec laquelle l'objet est irradié.

12. Système de construction (SYS) selon l'une quelconque des revendications 1 à 11, dans lequel
l'appareil d'affichage (91) est conçu pour afficher une image (WM) d'un objet (W) présentant une pièce défectueuse et la position désignée qui est affichée en association avec une image de la pièce défectueuse.

13. Procédé de construction pour la construction d'un objet de construction sur un objet,
le procédé de construction comprenant :
le support d'un objet avec un appareil de support ;
l'affichage d'une image (WM) relative à l'objet avec un appareil d'affichage ;
le procédé de construction étant **caractérisé par** :
la désignation d'une position sur la position de l'objet de construction qui doit être construit sur l'objet au moyen de l'image affichée avec un appareil de désignation ;
la mesure d'une position d'une partie de l'objet avec un appareil de mesure ;
la modification d'une relation de position relative entre l'appareil de support et une position traitée additivement de l'appareil de traitement additif avec un appareil de changement de position ; et la mise en œuvre d'un traitement additif sur l'objet avec un appareil de traitement additif pour construire un objet de construction sur l'objet, avec la commande de l'appareil de traitement additif et de l'appareil de changement de position pour construire l'objet de construction sur l'objet sur la base de la position désignée et de la position mesurée.
